# EUROPEAN PATENT APPLICATION

(11) **EP 4 075 688 A1**
(43) Date of publication of application: **19.10.2022**
(21) Application number: 20911260.6
(22) Date of filing: 12.08.2020
(51) Int. Cl.: H04B 10/071

(54) **OPTICAL DISTRIBUTION DEVICE, OPTICAL COMMUNICATION DETECTION SYSTEM, AND OPTICAL COMMUNICATION DETECTION METHOD**

(30) Priority: 31.12.2019 CN 201911418193
(71) Applicant: Huawei Technologies Co., Ltd., Shenzhen, Guangdong 518129, (CN)
(72) Inventor: QI, Biao, Shenzhen, Guangdong 518129 (CN); LI, Sanxing, Shenzhen, Guangdong 518129 (CN); ZHOU, Enyu, Shenzhen, Guangdong 518129 (CN); YANG, Bo, Shenzhen, Guangdong 518129 (CN)
(74) Representative: Maiwald Patent- und Rechtsanwaltsgesellschaft mbH
(86) International application number: PCT/CN2020/108611
(87) International publication number: WO 2021/135244

(57) **Abstract**

Embodiments of this application disclose an optical distribution apparatus, an optical communication detection system, and an optical communication detection method. An embodiment of this application provides an optical distribution apparatus, including: an input port, M output ports, and N first optical reflectors. M is greater than or equal to N. M and N are positive integers. The input port is separately connected to the M output ports through M optical fibers. One of the N first optical reflectors is connected to one of the M output ports in a pluggable manner. Each of the N first optical reflectors is configured to reflect a test optical signal entering a corresponding output port.

## Description

This application claims priority to Chinese Patent Application No. 201911418193.1, filed with the Chinese Patent Office on December 31, 2019 and entitled "optical distribution apparatus, optical communication detection system, and optical communication detection method", which is incorporated herein by reference in its entirety.

### TECHNICAL FIELD

Embodiments of this application relate to the field of optical communications, and in particular, to an optical distribution apparatus, an optical communication detection system, and an optical communication detection method.

### BACKGROUND

With development of optical communications technologies, a passive optical network (passive optical network, PON) technology is widely used in an access network. An optical communications system using the PON technology may include: an optical line terminal (optical line terminal, OLT), an optical distribution network (optical division network, ODN) device, and an optical network unit (optical network unit, ONU). The ODN device provides an optical transmission channel between the OLT and the ONU. The ODN device includes a plurality of optical fiber links, and each optical fiber link may include an optical fiber and an optical splitter. The optical splitter may be a one-level or multi-level optical splitter.

The OLT provides an optical fiber interface of a user-oriented passive optical network. The optical splitter splits and combines optical signals. The optical splitter is configured to distribute the optical signals, connect optical paths, and control transmission directions of the optical signals. The optical splitter may be disposed in a fiber termination box. The optical splitter is connected to the ONU through an output port of the fiber termination box. A plurality of output ports are usually disposed in the fiber termination box. As a form of access node, the ONU converts a transmitted optical signal into an electrical signal through an optical cable, and then transmits the electrical signal to each subscriber through a coaxial cable.

In the optical communications system using the PON, the OLT cannot identify an optical fiber link plug connected to the ONU. A user carries an ONU that has provisioned a service to another block, building, or room served by a same ODN device, and may share the ONU with one or more users in another building served by the same ODN device. A plurality of users may share access of a broadband service.

In a current construction process of the fiber termination box, because there is a plurality of output ports in the fiber termination box, a correct output port of the fiber termination box cannot be identified. This may cause an incorrect connection relationship between the optical fiber and the output port of the fiber termination box.

### SUMMARY

Embodiments of this application provide an optical distribution apparatus, an optical communication detection system, and an optical communication detection method, to accurately identify an output port in the optical distribution apparatus.

To resolve the foregoing problem, the embodiments of this application provide the following technical solutions.

According to a first aspect, an embodiment of this application provides an optical distribution apparatus, including: an input port, M output ports, and N first optical reflectors. M is greater than or equal to N. M and N are positive integers. The input port is separately connected to the M output ports through M optical fibers. One of the N first optical reflectors is connected to one of the M output ports in a pluggable manner. Each of the N first optical reflectors is configured to reflect a test optical signal entering a corresponding output port. In some embodiments of this application, the N first optical reflectors are connected to N output ports in a pluggable manner. Therefore, a first optical reflector may be inserted into an output port, or may be removed from the output port, to implement a dynamic connection between the first optical reflector and the output port. Each first optical reflector is connected to an output port in a pluggable manner. Therefore, the N first optical reflectors may be removed from the output ports. A removed first optical reflector cannot reflect a test optical signal entering a corresponding output port. In other words, the output port from which the first optical reflector is removed may be identified based on the fact that the removed first optical reflector does not reflect the test optical signal. Therefore, an output port of the optical distribution apparatus may be accurately identified in this embodiment of this application.

In a possible implementation, lengths of N optical fibers corresponding to the N output ports connected to the N first optical reflectors are different from each other. Reflection peak parameters corresponding to test optical signals separately reflected by the N first optical reflectors are different. In this solution, an input port in the optical distribution apparatus is separately connected to the M output ports through M optical fibers. The optical fiber lengths of the N optical fibers corresponding to the N output ports connected to the N first optical reflectors are different. Because of differences between the optical fiber lengths of the N optical fibers corresponding to the N output ports connected to the N first optical reflectors, transmission distances of test optical signals transmitted in different optical fibers are also different. Therefore, different test optical signals reflected by the first optical reflectors also correspond to different transmit peak parameters. For example, when the optical fiber lengths of the N optical fibers are different, the reflection peak parameters corresponding to the test optical signals separately reflected by the N first optical reflectors are also different. Therefore, different output ports may be distinguished based on the reflection peak parameters corresponding to the test optical signals separately reflected by the N first optical reflectors.

In a possible implementation, the test optical signals separately reflected by the N first optical reflectors have different wavelengths. In this solution, specifically, the N first optical reflectors respectively inserted into the N output ports in the optical distribution apparatus may reflect test optical signals with different wavelengths. The N first optical reflectors have different reflection functions. The optical detection device successively inputs the test optical signals with different wavelengths to the optical distribution apparatus, and each of the N optical reflectors in the optical distribution apparatus may reflect a test optical signal with one wavelength. Different output ports are distinguished based on the wavelengths corresponding to the test optical signals separately reflected by the N first optical reflectors. When a first optical reflector is removed from a corresponding output port, the removed first optical reflector may be determined through the optical detection device. Therefore, an output port that needs to be externally connected to an optical fiber in the optical distribution apparatus is identified according to a correspondence between the first optical reflector and the output port connected to the first optical reflector.

In a possible implementation, the optical distribution apparatus further includes an optical splitting module. One port of the optical splitting module is connected to the input port, and other M ports of the optical splitting module are respectively connected to the M optical fibers. In this solution, the optical distribution apparatus may include the optical splitting module. The optical splitting module is a module that performs optical splitting in the optical distribution apparatus. A port of the optical splitting module is connected to the input port. A test optical signal transmitted through the input port of the optical distribution apparatus may be divided into M test optical signals by the optical splitting module. The other M ports of the optical splitting module are respectively connected to the M optical fibers, so that the M test optical signals may be transmitted to the M output ports. For example, after a first optical reflector inserted into an output port is removed, another first optical reflector that is not removed may reflect the test optical signal. After being reflected by a first optical reflector inserted into an output port, the test optical signal is transmitted to the optical splitting module. The optical splitting module sends, to the optical detection device, the test optical signal reflected by the first optical reflector that is of the N first optical reflectors and that is not removed. In this embodiment of this application, the optical splitting module may be disposed in the optical distribution apparatus, and an optical signal may be separated and transmitted through the optical splitting module.

In a possible implementation, the optical distribution apparatus includes M input ports. The optical distribution apparatus is separately connected to M ports of an optical splitter through the M input ports. In this solution, the optical splitter may further be externally connected to the optical distribution apparatus. In other words, the optical splitter is a component independent of the optical distribution apparatus. After a test optical signal generated by the optical detection device is transmitted to the optical splitter, the optical splitter has M ports, and the optical distribution apparatus has M input ports, so that the optical distribution apparatus is separately connected to the M ports of the optical splitter through the M input ports. After first optical reflectors inserted into one or more output ports in the optical distribution apparatus are removed, a remaining first optical reflector that is not removed may reflect the test optical signal. After being reflected by the first optical reflector inserted into the output port of the optical distribution apparatus, the test optical signal is transmitted to the optical splitter. The optical splitter sends, to the optical detection device, the test optical signal reflected by the first optical reflector that is of the N first optical reflectors and that is not removed. In this embodiment of this application, the optical signal may be separated and transmitted through the optical splitter externally connected to the optical distribution apparatus.

In a possible implementation, the optical distribution apparatus further includes a second optical reflector. The second optical reflector is connected to the input port. A second reflection peak of a test optical signal that enters the input port and that is reflected by the second optical reflector is used to identify a first reflection peak of a test optical signal reflected by the first optical reflector. In this solution, the second optical reflector is further disposed between the input port and the N output ports in the optical distribution apparatus. The test optical signal generated by the optical detection device is transmitted to the second optical reflector after passing through the input port, and the second optical reflector may transmit the test optical signal to the N output ports. The N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

In a possible implementation, the optical distribution apparatus further includes N dustproof caps. One of the N dustproof caps and one first optical reflector form an integrated structure. In this solution, the dustproof cap may be inserted into the output port, to implement a waterproof and dustproof function and avoid damage to the output port. The dustproof cap and the first optical reflector may be an integrally formed structure. In other words, the dustproof cap and the first optical reflector are fixedly connected. When a first optical reflector needs to be removed from a first output port, only a dustproof cap connected to the first optical reflector needs to be removed. This simplifies construction and connection operations between the optical distribution apparatus and an ONU.

According to a second aspect, an embodiment of this application further provides an optical communication detection system, including an optical distribution apparatus, an optical detection device, and a network management device. The optical detection device is configured to send a test optical signal to the optical distribution apparatus. The optical distribution apparatus is configured to reflect the test optical signal through a first optical reflector in the optical distribution apparatus. The optical distribution apparatus has M output ports and N first optical reflectors. M is greater than or equal to N. M and N are positive integers. One of the N first optical reflectors is connected to one of the M output ports in a pluggable manner. The optical detection device is further configured to receive the test optical signal reflected by the first optical reflector, and send a reflected optical signal parameter corresponding to the test optical signal reflected by the first optical reflector to the network management device. The network management device is configured to receive the reflected optical signal parameter, corresponding to the test optical signal reflected by the first optical reflector, that is sent by the optical detection device, and identify an output port of the optical distribution apparatus based on the reflected optical signal parameter corresponding to the test optical signal reflected by the first optical reflector. In this solution, the optical communication detection system includes the optical distribution apparatus, the optical detection device, and the network management device. A first optical reflector removed from the optical distribution apparatus cannot reflect the test optical signal. Therefore, the network management device may identify an output port from which the first optical reflector is removed based on the fact that the removed first optical reflector does not reflect the test optical signal. In this way, the output port of the optical distribution apparatus may be accurately identified in this embodiment of this application.

In a possible implementation, the optical detection device is configured to send a first test optical signal to the optical distribution apparatus. The optical distribution apparatus is configured to separately reflect the first test optical signal through the N first optical reflectors in the optical distribution apparatus. The optical detection device is further configured to receive first test optical signals separately reflected by the N first optical reflectors, and send reflected optical signal parameters corresponding to the first test optical signals separately reflected by the N first optical reflectors to the network management device. The network management device is further configured to receive the reflected optical signal parameters, corresponding to the first test optical signals separately reflected by the N first optical reflectors, that are sent by the optical detection device, and detect a status of optical fiber links between the optical detection device and N output ports of the optical distribution apparatus based on the reflected optical signal parameters corresponding to the first test optical signals separately reflected by the N first optical reflectors. In this solution, the N first optical reflectors are connected to the N output ports in the optical distribution apparatus in a pluggable manner. The N first optical reflectors may reflect the test optical signal. Therefore, the network management device may detect the status of the optical fiber links between the optical detection device and the N output ports of the optical distribution apparatus based on the reflected optical signal parameters corresponding to the first test optical signals separately reflected by the N first optical reflectors, to detect whether a loss of the optical fiber links between the optical detection device and the N output ports in the optical distribution apparatus is normal. In this embodiment of this application, the first optical reflectors reflect the test optical signal. A variation of reflection peak strengths of test optical signals reflected by the first optical reflectors is used to determine whether the loss of the optical fiber links between the optical detection device and the N output ports in the optical distribution apparatus is normal. A normal loss of the optical fiber links indicates that construction acceptance of the optical distribution apparatus succeeds. An abnormal loss of the optical fiber links indicates that the construction acceptance of the optical distribution apparatus fails.

In a possible implementation, the reflected optical signal parameter includes a reflection peak strength of the first test optical signal reflected by the first optical reflector. The network management device is configured to: when reflection peak strengths corresponding to the first test optical signals separately reflected by the N first optical reflectors are lower than a first threshold, determine that a status of an optical fiber link between the optical detection device and an input port of the optical distribution apparatus is abnormal, or when the reflection peak strengths corresponding to the first test optical signals separately reflected by the N first optical reflectors are lower than a second threshold, determine that a status of optical fiber links between the input port and the N output ports of the optical distribution apparatus is abnormal, or when the reflection peak strengths corresponding to the first test optical signals separately reflected by the N first optical reflectors are greater than or equal to the first threshold, determine that the status of the optical fiber links between the optical detection device and the N output ports of the optical distribution apparatus is normal. The second threshold is less than the first threshold. In this solution, the network management device calculates a reflection peak position of the test optical signal reflected by each first optical reflector, and determines whether the loss of the optical fiber links is normal by comparing an actually measured reflection peak strength with a pre-stored reflection peak strength. The first threshold and the second threshold are separately set, and the reflection peak strengths corresponding to the first test optical signals separately reflected by the N first optical reflectors are compared with the first threshold and the second threshold, to accept a construction quality of the output ports of the optical distribution apparatus without a manual operation. This improves efficiency of accepting the construction quality of the output ports of the optical distribution apparatus.

In a possible implementation, the optical detection device is configured to send a second test optical signal to the optical distribution apparatus. The optical distribution apparatus is configured to separately reflect the second test optical signal through N-1 first optical reflectors in the optical distribution apparatus. The N-1 first optical reflectors are connected to N-1 of the M output ports. A first optical reflector that is of the N first optical reflectors and that is not connected to an output port cannot reflect the second test optical signal. The optical detection device is further configured to receive second test optical signals separately reflected by the N-1 first optical reflectors, and send reflected optical signal parameters corresponding to the second test optical signals separately reflected by the N-1 first optical reflectors to the network management device. The network management device is configured to receive the reflected optical signal parameters, corresponding to the second test optical signals separately reflected by the N-1 first optical reflectors, that are sent by the optical detection device, and identify, based on the reflected optical signal parameters corresponding to the second test optical signals separately reflected by the N-1 first optical reflectors, an output port from which a first optical reflector is removed in the optical distribution apparatus. In this solution, the network management device may further detect whether an output port under construction is correct. The network management device can communicate with the optical detection device, to receive reflected optical signal parameters, corresponding to test optical signals separately reflected by first optical reflectors that are of the N first optical reflectors and that are not removed, that are sent by the optical detection device. The test optical signals separately reflected by the N first optical reflectors can be used to distinguish the N output ports. Therefore, the network management device determines, based on the reflected optical signal parameters corresponding to the test optical signals separately reflected by the first optical reflectors that are of the N first optical reflectors and that are not removed, whether the output port from which the first optical reflector is removed is a target output port. This avoids a case in which an external optical fiber may be connected to an incorrect output port in a construction process.

In a possible implementation, the network management device is configured to: when a first optical reflector needs to be removed from the target output port in the optical distribution apparatus, obtain a reference reflected optical signal parameter corresponding to the target output port from a reference database of the network management device; determine, based on the reflected optical signal parameters corresponding to the second test optical signals separately reflected by the N-1 first optical reflectors, a reflected optical signal parameter corresponding to a disappeared reflected optical signal; and determine whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the output port from which the first optical reflector is removed in the optical distribution apparatus. If the reflected optical signal parameter corresponding to the disappeared reflected optical signal is different from the reference reflected optical signal parameter corresponding to the target output port, the network management device determines that the target output port is not the output port from which the first optical reflector is removed in the optical distribution apparatus. In this solution, the output port of the optical distribution apparatus can be identified without a manual operation, to ensure a correct connection between the output port of the optical distribution apparatus and the external optical fiber.

In a possible implementation, the reflected optical signal parameter includes a reflection peak position and a reflection peak strength corresponding to the reflection peak position. Alternatively, the reflected optical signal parameter includes wavelength information of a reflected optical signal. In this solution, the network management device may determine whether a reflection peak strength corresponding to the disappeared reflected optical signal is the same as a reference reflection peak strength corresponding to the target output port. If the reflection peak strength corresponding to the disappeared reflected optical signal is the same as the reference reflection peak strength corresponding to the target output port, the network management device determines that the target output port is a first output port. If the reflection peak strength corresponding to the disappeared reflected optical signal is different from the reference reflection peak strength corresponding to the target output port, the network management device determines that the target output port is not the first output port. In addition, the network management device may determine whether wavelength information corresponding to the disappeared reflected optical signal is the same as reference wavelength information corresponding to the target output port. If the wavelength information corresponding to the disappeared reflected optical signal is the same as the reference wavelength information corresponding to the target output port, the network management device determines that the target output port is the first output port. If the wavelength information corresponding to the disappeared reflected optical signal is different from the reference wavelength information corresponding to the target output port, the network management device determines that the target output port is not the first output port.

In a possible implementation, the optical distribution apparatus further includes the input port and a second optical reflector. The second optical reflector is connected to the input port. The network management device is configured to detect a second reflection peak of a test optical signal that enters the input port and that is reflected by the second optical reflector, and identify, based on the second reflection peak, a first reflection peak of the test optical signal reflected by the first optical reflector. In this solution, the N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

According to a third aspect, an embodiment of this application further provides an optical communication detection method, including: A network management device receives a reflected optical signal parameter, corresponding to a test optical signal reflected by a first optical reflector, that is sent by an optical detection device. The test optical signal reflected by the first optical reflector is sent by an optical distribution apparatus to the optical detection device. The test optical signal is sent by the optical detection device to the optical distribution apparatus. The optical distribution apparatus has M output ports and N first optical reflectors. M is greater than or equal to N. M and N are positive integers. One of the N first optical reflectors is connected to one of the M output ports in a pluggable manner. The network management device identifies an output port of the optical distribution apparatus based on the reflected optical signal parameter corresponding to the test optical signal reflected by the first optical reflector. In this solution, the optical communication detection system includes the optical distribution apparatus. A first optical reflector removed from the optical distribution apparatus cannot reflect the test optical signal. Therefore, the network management device may identify an output port from which the first optical reflector is removed based on the fact that the removed first optical reflector does not reflect the test optical signal. In this way, the output port of the optical distribution apparatus may be accurately identified in this embodiment of this application.

In a possible implementation, after the network management device identifies the output port of the optical distribution apparatus based on the reflected optical signal parameter corresponding to the test optical signal reflected by the first optical reflector, the method further includes: When the network management device receives reflected optical signal parameters, corresponding to first test optical signals separately reflected by the N first optical reflectors, that are sent by the optical detection device, the network management device detects a status of optical fiber links between the optical detection device and N output ports of the optical distribution apparatus based on the reflected optical signal parameters corresponding to the first test optical signals separately reflected by the N first optical reflectors. In this solution, the N first optical reflectors are connected to the N output ports in the optical distribution apparatus in a pluggable manner. The N first optical reflectors may reflect the test optical signal. Therefore, the network management device may detect the status of the optical fiber links between the optical detection device and the N output ports of the optical distribution apparatus based on the reflected optical signal parameters corresponding to the first test optical signals separately reflected by the N first optical reflectors, to detect whether a loss of the optical fiber links between the optical detection device and the N output ports in the optical distribution apparatus is normal. In this embodiment of this application, the first optical reflectors reflect the test optical signal. A variation of reflection peak strengths of test optical signals reflected by the first optical reflectors is used to determine whether the loss of the optical fiber links between the optical detection device and the N output ports in the optical distribution apparatus is normal. A normal loss of the optical fiber links indicates that construction acceptance of the optical distribution apparatus succeeds. An abnormal loss of the optical fiber links indicates that the construction acceptance of the optical distribution apparatus fails.

In a possible implementation, the reflected optical signal parameter includes a reflection peak strength of the first test optical signal reflected by the first optical reflector. That the network management device detects a status of optical fiber links between the optical detection device and the N output ports of the optical distribution apparatus based on the reflected optical signal parameters corresponding to the first test optical signals separately reflected by the N first optical reflectors includes: When reflection peak strengths corresponding to the first test optical signals separately reflected by the N first optical reflectors are lower than a first threshold, the network management device determines that a status of an optical fiber link between the optical detection device and an input port of the optical distribution apparatus is abnormal. Alternatively, when the reflection peak strengths corresponding to the first test optical signals separately reflected by the N first optical reflectors are lower than a second threshold, the network management device determines that a status of optical fiber links between the input port and the M output ports of the optical distribution apparatus is abnormal. Alternatively, when the reflection peak strengths corresponding to the first test optical signals separately reflected by the N first optical reflectors are greater than or equal to the first threshold, the network management device determines that the status of the optical fiber links between the optical detection device and the M output ports of the optical distribution apparatus is normal. The second threshold is less than the first threshold. In this solution, the network management device calculates a reflection peak position of the test optical signal reflected by each first optical reflector, and determines whether the loss of the optical fiber links is normal by comparing an actually measured reflection peak strength with a pre-stored reflection peak strength. The first threshold and the second threshold are separately set, and the reflection peak strengths corresponding to the first test optical signals separately reflected by the N first optical reflectors are compared with the first threshold and the second threshold, to accept a construction quality of the output ports of the optical distribution apparatus without a manual operation. This improves efficiency of accepting the construction quality of the output ports of the optical distribution apparatus.

In a possible implementation, that the network management device identifies an output port of the optical distribution apparatus based on the reflected optical signal parameter corresponding to the test optical signal reflected by the first optical reflector includes: When the network management device receives reflected optical signal parameters, corresponding to second test optical signals separately reflected by the N-1 first optical reflectors, that are sent by the optical detection device, the network management device identifies, based on the reflected optical signal parameters corresponding to the second test optical signals separately reflected by the N-1 first optical reflectors, an output port from which a first optical reflector is removed in the optical distribution apparatus. The N-1 first optical reflectors are connected to N-1 of the M output ports. A first optical reflector that is of the N first optical reflectors and that is not connected to an output port cannot reflect the second test optical signal. In this solution, the network management device may further detect whether an output port under construction is correct. The network management device can communicate with the optical detection device, to receive reflected optical signal parameters, corresponding to test optical signals separately reflected by first optical reflectors that are of the N first optical reflectors and that are not removed, that are sent by the optical detection device. The test optical signals separately reflected by the N first optical reflectors can be used to distinguish the N output ports. Therefore, the network management device determines, based on the reflected optical signal parameters corresponding to the test optical signals separately reflected by the first optical reflectors that are of the N first optical reflectors and that are not removed, whether the output port from which the first optical reflector is removed is a target output port. This avoids a case in which an external optical fiber may be connected to an incorrect output port in a construction process.

In a possible implementation, that the network management device identifies, based on the reflected optical signal parameters corresponding to the second test optical signals separately reflected by the N-1 first optical reflectors, an output port from which a first optical reflector is removed in the optical distribution apparatus includes: When a first optical reflector needs to be removed from the target output port in the optical distribution apparatus, the network management device obtains a reference reflected optical signal parameter corresponding to the target output port from a reference database of the network management device. The network management device determines, based on the reflected optical signal parameters corresponding to the second test optical signals separately reflected by the N-1 first optical reflectors, a reflected optical signal parameter corresponding to a disappeared reflected optical signal. The network management device determines whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the output port from which the first optical reflector is removed in the optical distribution apparatus. If the reflected optical signal parameter corresponding to the disappeared reflected optical signal is different from the reference reflected optical signal parameter corresponding to the target output port, the network management device determines that the target output port is not the output port from which the first optical reflector is removed in the optical distribution apparatus. In this solution, the output port of the optical distribution apparatus can be identified without a manual operation, to ensure a correct connection between the output port of the optical distribution apparatus and the external optical fiber.

In a possible implementation, the reflected optical signal parameter includes a reflection peak position and a reflection peak strength corresponding to the reflection peak position. Alternatively, the reflected optical signal parameter includes a wavelength of a reflected optical signal. In this solution, the network management device may determine whether a reflection peak strength corresponding to the disappeared reflected optical signal is the same as a reference reflection peak strength corresponding to the target output port. If the reflection peak strength corresponding to the disappeared reflected optical signal is the same as the reference reflection peak strength corresponding to the target output port, the network management device determines that the target output port is a first output port. If the reflection peak strength corresponding to the disappeared reflected optical signal is different from the reference reflection peak strength corresponding to the target output port, the network management device determines that the target output port is not the first output port. In addition, the network management device may determine whether wavelength information corresponding to the disappeared reflected optical signal is the same as reference wavelength information corresponding to the target output port. If the wavelength information corresponding to the disappeared reflected optical signal is the same as the reference wavelength information corresponding to the target output port, the network management device determines that the target output port is the first output port. If the wavelength information corresponding to the disappeared reflected optical signal is different from the reference wavelength information corresponding to the target output port, the network management device determines that the target output port is not the first output port.

In a possible implementation, the optical distribution apparatus further includes the input port and a second optical reflector. The second optical reflector is connected to the input port. The method further includes: The network management device detects a second reflection peak of a test optical signal that enters the input port and that is reflected by the second optical reflector. The network management device identifies, based on the second reflection peak, a first reflection peak of the test optical signal reflected by the first optical reflector. In this solution, the N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

In the third aspect of this application, the optical distribution apparatus in the optical communication detection system may further have the structural feature described in the first aspect and the possible implementations. For details, refer to the descriptions in the first aspect and the possible implementations.

According to a fourth aspect, an embodiment of this application further provides an optical communication detection method. The method is applied to an optical communication detection system. The optical communication detection system includes an optical distribution apparatus, an optical detection device, and a network management device. The method includes: The optical detection device sends a test optical signal to the optical distribution apparatus. The optical distribution apparatus reflects the test optical signal through a first optical reflector in the optical distribution apparatus. The optical distribution apparatus has M output ports and N first optical reflectors. M is greater than or equal to N. M and N are positive integers. One of the N first optical reflectors is connected to one of the M output ports in a pluggable manner. The optical detection device receives the test optical signal reflected by the first optical reflector, and sends a reflected optical signal parameter corresponding to the test optical signal reflected by the first optical reflector to the network management device. The network management device receives the reflected optical signal parameter, corresponding to the test optical signal reflected by the first optical reflector, that is sent by the optical detection device. The network management device identifies an output port of the optical distribution apparatus based on the reflected optical signal parameter corresponding to the test optical signal reflected by the first optical reflector. In this solution, the optical communication detection system includes the optical distribution apparatus. A first optical reflector removed from the optical distribution apparatus cannot reflect the test optical signal. Therefore, the network management device may identify an output port from which the first optical reflector is removed based on the fact that the removed first optical reflector does not reflect the test optical signal. In this way, the output port of the optical distribution apparatus may be accurately identified in this embodiment of this application.

In a possible implementation, the method further includes: When the network management device receives reflected optical signal parameters, corresponding to first test optical signals separately reflected by the N first optical reflectors, that are sent by the optical detection device, the network management device detects a status of optical fiber links between the optical detection device and the N output ports of the optical distribution apparatus based on the reflected optical signal parameters corresponding to the first test optical signals separately reflected by the N first optical reflectors.

In a possible implementation, the reflected optical signal parameter includes a reflection peak strength of the first test optical signal reflected by the first optical reflector. That the network management device detects a status of optical fiber links between the optical detection device and the N output ports of the optical distribution apparatus based on the reflected optical signal parameters corresponding to the first test optical signals separately reflected by the N first optical reflectors includes: When reflection peak strengths corresponding to the first test optical signals separately reflected by the N first optical reflectors are lower than a first threshold, the network management device determines that a status of an optical fiber link between the optical detection device and an input port of the optical distribution apparatus is abnormal. Alternatively, when the reflection peak strengths corresponding to the first test optical signals separately reflected by the N first optical reflectors are lower than a second threshold, the network management device determines that a status of optical fiber links between the input port and the M output ports of the optical distribution apparatus is abnormal. Alternatively, when the reflection peak strengths corresponding to the first test optical signals separately reflected by the N first optical reflectors are greater than or equal to the first threshold, the network management device determines that the status of the optical fiber links between the optical detection device and the N output ports of the optical distribution apparatus is normal. The second threshold is less than the first threshold. In this solution, the network management device calculates a reflection peak position of the test optical signal reflected by each first optical reflector, and determines whether the loss of the optical fiber links is normal by comparing an actually measured reflection peak strength with a pre-stored reflection peak strength. The first threshold and the second threshold are separately set, and the reflection peak strengths corresponding to the first test optical signals separately reflected by the N first optical reflectors are compared with the first threshold and the second threshold, to accept a construction quality of the output ports of the optical distribution apparatus without a manual operation. This improves efficiency of accepting the construction quality of the output ports of the optical distribution apparatus.

In a possible implementation, that the network management device identifies an output port of the optical distribution apparatus based on the reflected optical signal parameter corresponding to the test optical signal reflected by the first optical reflector includes: When the network management device receives reflected optical signal parameters, corresponding to second test optical signals separately reflected by the N-1 first optical reflectors, that are sent by the optical detection device, the network management device identifies, based on the reflected optical signal parameters corresponding to the second test optical signals separately reflected by the N-1 first optical reflectors, an output port from which a first optical reflector is removed in the optical distribution apparatus. The N-1 first optical reflectors are connected to N-1 of the M output ports. A first optical reflector that is of the N first optical reflectors and that is not connected to an output port cannot reflect the second test optical signal. In this solution, the network management device may further detect whether an output port under construction is correct. The network management device can communicate with the optical detection device, to receive reflected optical signal parameters, corresponding to test optical signals separately reflected by first optical reflectors that are of the N first optical reflectors and that are not removed, that are sent by the optical detection device. The test optical signals separately reflected by the N first optical reflectors can be used to distinguish the N output ports. Therefore, the network management device determines, based on the reflected optical signal parameters corresponding to the test optical signals separately reflected by the first optical reflectors that are of the N first optical reflectors and that are not removed, whether the output port from which the first optical reflector is removed is a target output port. This avoids a case in which an external optical fiber may be connected to an incorrect output port in a construction process.

In a possible implementation, that the network management device identifies, based on the reflected optical signal parameters corresponding to the second test optical signals separately reflected by the N-1 first optical reflectors, an output port from which a first optical reflector is removed in the optical distribution apparatus includes: When a first optical reflector needs to be removed from the target output port in the optical distribution apparatus, the network management device obtains a reference reflected optical signal parameter corresponding to the target output port from a reference database of the network management device. The network management device determines, based on the reflected optical signal parameters corresponding to the second test optical signals separately reflected by the N-1 first optical reflectors, a reflected optical signal parameter corresponding to a disappeared reflected optical signal. The network management device determines whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the output port from which the first optical reflector is removed in the optical distribution apparatus. If the reflected optical signal parameter corresponding to the disappeared reflected optical signal is different from the reference reflected optical signal parameter corresponding to the target output port, the network management device determines that the target output port is not the output port from which the first optical reflector is removed in the optical distribution apparatus. In this solution, the output port of the optical distribution apparatus can be identified without a manual operation, to ensure a correct connection between the output port of the optical distribution apparatus and the external optical fiber.

In a possible implementation, the reflected optical signal parameter includes a reflection peak position and a reflection peak strength corresponding to the reflection peak position. Alternatively, the reflected optical signal parameter includes a wavelength of a reflected optical signal. In this solution, the network management device may determine whether a reflection peak strength corresponding to the disappeared reflected optical signal is the same as a reference reflection peak strength corresponding to the target output port. If the reflection peak strength corresponding to the disappeared reflected optical signal is the same as the reference reflection peak strength corresponding to the target output port, the network management device determines that the target output port is a first output port. If the reflection peak strength corresponding to the disappeared reflected optical signal is different from the reference reflection peak strength corresponding to the target output port, the network management device determines that the target output port is not the first output port. In addition, the network management device may determine whether wavelength information corresponding to the disappeared reflected optical signal is the same as reference wavelength information corresponding to the target output port. If the wavelength information corresponding to the disappeared reflected optical signal is the same as the reference wavelength information corresponding to the target output port, the network management device determines that the target output port is the first output port. If the wavelength information corresponding to the disappeared reflected optical signal is different from the reference wavelength information corresponding to the target output port, the network management device determines that the target output port is not the first output port.

In a possible implementation, the optical distribution apparatus further includes the input port and a second optical reflector. The second optical reflector is connected to the input port. The method further includes: The network management device detects a second reflection peak of a test optical signal that enters the input port and that is reflected by the second optical reflector. The network management device identifies, based on the second reflection peak, a first reflection peak of the test optical signal reflected by the first optical reflector. In this solution, the N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

According to a fifth aspect, an embodiment of this application provides a computer-readable storage medium. The computer-readable storage medium stores an instruction. When the instruction is run on a computer, the computer is enabled to perform the method implemented by the optical detection device and the network management device in the third aspect or the fourth aspect.

According to a sixth aspect, an embodiment of this application provides a computer program product including an instruction. When the computer program product runs on a computer, the computer is enabled to perform the method implemented by the optical detection device and the network management device in the third aspect or the fourth aspect.

According to a seventh aspect, an embodiment of this application provides an optical communication detection system. The optical communication detection system includes an optical distribution apparatus, an optical detection device, and a network management device. The optical detection device and the network management device each include a processor and a memory. The memory is configured to store an instruction. The processor is configured to execute the instruction in the memory, so that each component in the optical communication detection system is enabled to perform the method implemented by the optical detection device and the network management device in the third aspect or the fourth aspect.

According to an eighth aspect, this application provides an optical detection device. The optical detection device includes a processor, configured to support the optical detection device in implementing a function in the third aspect, for example, sending or processing data and/or information in the foregoing method. In a possible design, the optical detection device further includes a memory. The memory is configured to store a program instruction and data that are necessary for the optical detection device. The optical detection device may include a chip, or may include a chip and another discrete component.

According to a ninth aspect, this application provides a network management device. The network management device includes a processor, configured to support the network management device in implementing a function in the third aspect or the fourth aspect, for example, sending or processing data and/or information in the foregoing method. In a possible design, the network management device further includes a memory. The memory is configured to store a program instruction and data that are necessary for the network management device. The network management device may include a chip, or may include a chip and another discrete component.

### BRIEF DESCRIPTION OF DRAWINGS

FIG. 1 is a schematic diagram of a composition structure of an optical communications system according to an embodiment of this application;
FIG. 2 is a schematic diagram of a composition structure of an optical distribution apparatus according to an embodiment of this application;
FIG. 3 is a schematic diagram of a composition structure of another optical distribution apparatus according to an embodiment of this application;
FIG. 4 is a schematic diagram of a composition structure of an optical communication detection system according to an embodiment of this application;
FIG. 5 is a schematic diagram of a composition structure of another optical communication detection system according to an embodiment of this application;
FIG. 6 is a schematic diagram of a composition structure of a fiber termination box according to an embodiment of this application;
FIG. 7 is a schematic diagram of an OTDR detection curve according to an embodiment of this application;
FIG. 8 is a schematic diagram of a system architecture to which a fiber termination box is applied according to an embodiment of this application;
FIG. 9 is a schematic diagram of a reflection peak power of a reflected optical signal according to an embodiment of this application;
FIG. 10 is a schematic diagram of a system architecture in which a fiber termination box is externally connected to an ONU according to an embodiment of this application;
FIG. 11 is a schematic diagram of identifying a reflection peak from an OTDR detection curve according to an embodiment of this application;
FIG. 12 is a schematic diagram of a composition structure of a fiber termination box according to an embodiment of this application;
FIG. 13 is a schematic diagram of another system architecture to which a fiber termination box is applied according to an embodiment of this application;
FIG. 14 is a schematic diagram of another system architecture in which a fiber termination box is externally connected to an ONU according to an embodiment of this application;
FIG. 15 is another schematic diagram of identifying a reflection peak from an OTDR detection curve according to an embodiment of this application;
FIG. 16 is a schematic diagram of a composition structure of another fiber termination box according to an embodiment of this application;
FIG. 17 is a schematic diagram of another OTDR detection curve according to an embodiment of this application;
FIG. 18 is a schematic diagram of another system architecture in which a fiber termination box is externally connected to an ONU according to an embodiment of this application;
FIG. 19 is a schematic diagram of identifying a reflection peak from an OTDR detection curve according to an embodiment of this application;
FIG. 20 is a schematic diagram of a composition structure of an optical detection device according to an embodiment of this application; and
FIG. 21 is a schematic diagram of a composition structure of a network management device according to an embodiment of this application.

### DESCRIPTION OF EMBODIMENTS

Embodiments of this application provide an optical distribution apparatus, an optical communication detection system, and an optical communication detection method, to accurately identify an output port in the optical distribution apparatus.

The following describes the embodiments of this application with reference to accompanying drawings.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner for describing objects having a same attribute in the embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

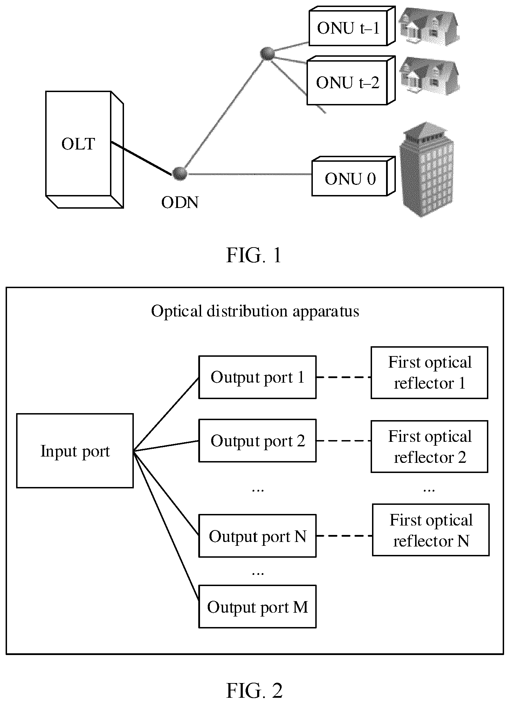

The technical solutions in the embodiments of this application may be applied to various optical communications systems. As shown in FIG. 1, an optical communications system provided in an embodiment of this application may include an optical line terminal (optical line terminal, OLT), an optical distribution network (optical division network, ODN) device, and t optical network units (optical network unit, ONU) In this embodiment of this application, the OLT is separately connected to the t ONUs through the ODN device. For example, the t ONUs may be ONU 0, ..., ONU t-2, and ONU t-1 shown in FIG. 1. The ODN device is a passive component, and the ODN device includes an optical distribution apparatus. The optical distribution apparatus has a plurality of output ports, and at least one of the output ports is inserted with an optical reflector (which may be referred to as a reflector for short in subsequent embodiments). For example, the optical distribution apparatus has M output ports. M is greater than or equal to N. For example, M is greater than N, and N of the M output ports are separately inserted with optical reflectors. To be specific, N optical reflectors are inserted into the N output ports of the optical distribution apparatus, and each of the N output ports is inserted with one optical reflector. For another example, M is equal to N. In this case, the optical distribution apparatus has a total of N output ports, and each of the N output ports is inserted with one optical reflector. In a subsequent embodiment, an example in which each output port in the optical distribution apparatus is inserted with an optical reflector is used for description. In this embodiment of this application, the optical reflector is connected to the output port in a pluggable manner. To be specific, the N optical reflectors may be inserted into the N output ports, and when one or more output ports in the optical distribution apparatus need to be externally connected to optical fibers, optical reflectors may be removed from the one or more output ports. Therefore, the optical reflector in this embodiment of this application may be a disposable optical reflector.

When an output port in the optical distribution apparatus needs to be externally connected to an ONU, an optical reflector inserted into the output port may be removed. Then, an optical fiber is inserted into the output port, and the output port is connected to the ONU through the optical fiber. The optical distribution apparatus may include at least one of the following devices: a fiber access terminal (fiber access terminal, FAT), a splitting and splicing closure (splitting and splicing closure, SSC), an access terminal box (access terminal box, ATB), or an optical distribution frame (optical distribution frame, ODF). The optical distribution frame may be used for termination and distribution of a feeder optical cable at a central office in an optical communications system, to conveniently connect, distribute, and schedule optical fibers. The fiber access terminal is located at a user access point in an optical access network, to connect a distribution optical cable to a drop cable and implement a direct connection, branching, and protection of the optical fibers. An optical splitter and the like may be disposed inside the fiber access terminal. The splitting and splicing closure may be an outdoor product that can be installed in a manhole or handhole, and is mainly used at the user access point of the optical access network, to connect and branch optical cables and route a drop cable from a user terminal. The access terminal box is a passive device used to connect the drop cable to an indoor ONU. The access terminal box is installed on a user's indoor wall and provides an optical fiber interface for the indoor ONU. It should be noted that the optical distribution apparatus is not limited to the foregoing several types, and the optical distribution apparatus may be any node device in the ODN device.

FIG. 2 shows an optical distribution apparatus according to an embodiment of this application. The optical distribution apparatus includes an input port, M output ports, and N first optical reflectors. M is greater than or equal to N. M and N are positive integers.

The input port is separately connected to the M output ports through M optical fibers.

One of the N first optical reflectors is connected to one of the M output ports in a pluggable manner, and each of the N first optical reflectors is configured to reflect a test optical signal entering a corresponding output port.

It should be noted that the optical distribution apparatus has M output ports, and M is greater than or equal to N. For example, FIG. 2 illustrates that when M is greater than N, first optical reflectors are separately inserted into N of the M output ports. Therefore, N first optical reflectors need to be inserted into the N output ports. For another example, M is equal to N. In this case, each of the N output ports in the optical distribution apparatus is inserted with a first optical reflector, and no figure is used for description herein again. In this embodiment of this application, the first optical reflector is connected to the output port in a pluggable manner. To be specific, N optical reflectors may be inserted into the N output ports, and when one or more output ports in the optical distribution apparatus need to be externally connected to optical fibers, optical reflectors may be removed from the one or more output ports. The first optical reflector in this embodiment of this application may be a disposable optical reflector. In FIG. 2, a connection between the output port of the optical distribution apparatus and the first optical reflector is indicated by a dashed line, to indicate a pluggable relationship between the output port and the first optical reflector.

The optical distribution apparatus has at least one input port. The input port is configured to input a test optical signal to the optical distribution apparatus externally. The test optical signal is used to test whether construction of the output ports in the optical distribution apparatus and an external optical fiber meets a requirement and whether an output port, in the optical distribution apparatus, that is selected for the external optical fiber is correct. The test optical signal may be input to the optical distribution apparatus by an optical detection device. The optical detection device may be an optical time domain reflectometer (optical time domain reflectometer, OTDR). The optical detection device may generate an OTDR detection curve, and display a reflection peak corresponding to each reflected optical signal on the OTDR detection curve. The optical detection device may be an independent component, or may be integrated with another component in an optical communications system. This is not limited. For example, the optical detection device may be integrated with an OLT. To be specific, the OLT may include the optical detection device. For example, the OLT includes an OTDR component, configured to input the test optical signal to the optical distribution apparatus.

In addition to the input port, the optical distribution apparatus may further include a plurality of output ports. A quantity of output ports is represented by a letter M. A value of M may be 2, or the value of M is greater than 2. A quantity of output ports included in the optical distribution apparatus is not limited. The input port is separately connected to the M output ports through M optical fibers. To be specific, the input port may be connected to one output port through one optical fiber. The optical distribution apparatus has M output ports. Therefore, a total of M optical fibers are required. A test optical signal input to the optical distribution apparatus through the input port may be transmitted to the output ports through the optical fibers. First optical reflectors are inserted into N of the M output ports. The first optical reflector may be referred to as a "first reflector" or a "reflector" for short. The first optical reflector is a component configured to reflect an optical signal. When an optical signal enters the first optical reflector, the first optical reflector may reflect the optical signal. For example, the optical signal may be a test optical signal or a service optical signal.

It should be noted that, in this embodiment of this application, the first optical reflector refers to an optical reflector connected to an output port of the optical distribution apparatus in a pluggable manner. It can be learned from subsequent description that a second optical reflector refers to an optical reflector connected to the input port of the optical distribution apparatus. The first optical reflector and the second optical reflector may be used to distinguish and describe optical reflectors connected to different types of ports. For example, in a subsequent description of the first optical reflector connected to the output port of the optical distribution apparatus, the first optical reflector is also referred to as a reflector for short.

When the test optical signal enters an output port, if a first optical reflector is inserted into the output port, the first optical reflector may reflect the test optical signal, and the first optical reflector may further transmit the reflected test optical signal to the input port through an optical fiber. In this embodiment of this application, test optical signals separately reflected by the N first optical reflectors are used to distinguish the different N output ports. The first optical reflectors are separately inserted into the N output ports. In other words, a first optical reflector is in a one-to-one correspondence with an output port connected to the first optical reflector. The test optical signals separately reflected by the N first optical reflectors are also transmitted in different optical fibers. The test optical signals separately reflected by the N first optical reflectors are analyzed to accurately distinguish the N output ports in the optical distribution apparatus. In this embodiment of this application, the first optical reflector may have one or more types of reflectivities. The first optical reflector may be a single-port component or a dual-port component. The single-port component means that only a port on one side can be connected to the optical fiber. The dual-port component means that ports on both sides can be connected to the optical fibers. The first optical reflector is an optical reflection component plated with a dielectric film and a fiber Bragg grating (fiber Bragg grating, FBG). Alternatively, the first optical reflector may be an optical reflection component plated with a metal film. Alternatively, the first optical reflector may be a component that implements an optical signal reflection function through a special structure. This is not limited herein.

In this embodiment of this application, the N first optical reflectors are connected to the N output ports of the optical distribution apparatus in a pluggable manner. When one output port or a plurality of output ports need to be externally connected to an ONU, a first optical reflector inserted into the output port may be removed. In others words, the first optical reflector may be disconnected from the output port. Then, an optical fiber is inserted into the output port, and the output port is connected to the ONU through the optical fiber. For example, a first output port is any one of the N output ports. A first optical reflector is inserted into the first output port. When the first output port needs to be connected to an optical fiber, the first optical reflector inserted into the first output port may be removed from the first output port. The removed first optical reflector cannot reflect a test optical signal entering the first output port. In other words, the first output port from which the first optical reflector is removed may be identified based on the fact that the removed first optical reflector does not reflect the test optical signal. Therefore, the output port of the optical distribution apparatus may be accurately identified in this embodiment of this application.

It should be noted that the first optical reflector is pluggable in the output port. When the output port needs to be used, the inserted first optical reflector needs to be removed. Therefore, optical performance of the first optical reflector does not deteriorate optical fiber link communication after construction is completed. In this embodiment of this application, the first optical reflector may have one or more preset reflectivities, and may reflect the test optical signal and the service optical signal, to generate large attenuation. In addition, the first optical reflector may alternatively reflect only the test optical signal, to generate the large attenuation.

In some embodiments of this application, the optical distribution apparatus further includes N dustproof caps. Each of the N dustproof caps and one first optical reflector form an integrated structure. The dustproof cap may be inserted into the output port, to implement a waterproof and dustproof function and avoid damage to the output port. The dustproof cap and the first optical reflector may be an integrally formed structure. In other words, the dustproof cap and the first optical reflector are fixedly connected. When the first optical reflector needs to be removed from the first output port, only a dustproof cap connected to the first optical reflector needs to be removed. This simplifies construction and connection operations between the optical distribution apparatus and the ONU.

It should be noted that, the first optical reflector and the dustproof cap may be the integrally formed structure, but in this embodiment of this application, the first optical reflector and the dustproof cap may alternatively be independent components separated from each other. In other words, the first optical reflector may be inserted into the output port and then connect the dustproof cap to the output port. This is not limited.

In some embodiments of this application, lengths of N optical fibers corresponding to the N output ports connected to the N first optical reflectors are different from each other.

Reflection peak parameters corresponding to the test optical signals separately reflected by the N first optical reflectors are different.

The input port in the optical distribution apparatus is separately connected to the M output ports through the M optical fibers. The optical fiber lengths of the N optical fibers corresponding to the N output ports connected to the N first optical reflectors are different. An optical fiber length refers to a length of an optical fiber connecting an input port and an output port. Because of differences between the optical fiber lengths of the N optical fibers corresponding to the N output ports connected to the N first optical reflectors, transmission distances of test optical signals transmitted in different optical fibers are also different. Therefore, different test optical signals reflected by the first optical reflectors also correspond to different transmit peak parameters. For example, when the optical fiber lengths of the N optical fibers are different, the reflection peak parameters corresponding to the test optical signals separately reflected by the N first optical reflectors are also different. Therefore, different output ports may be distinguished based on the reflection peak parameters corresponding to the test optical signals separately reflected by the N first optical reflectors. The reflection peak parameter refers to a waveform curve parameter generated when the first optical reflector reflects the test optical signal. When a test optical signal transmitted in an optical fiber is reflected by the first optical reflector, a reflection peak is generated for the reflected test optical signal. In this embodiment of this application, the input port may be connected to the N output ports through optical fibers with different lengths, and lengths of optical fibers between the input port and different output ports are different according to a pre-planned optical fiber length plan. The different output ports may be distinguished by testing specific optical fiber lengths separately corresponding to the different output ports, to accurately distinguish output ports in which optical reflectors are inserted.

In some embodiments of this application, the optical fiber lengths of the N optical fibers corresponding to the N output ports connected to the N first optical reflectors meet a preset difference relationship.

Specifically, the optical fiber lengths of the N optical fibers are different, and the optical fiber lengths of the N optical fibers meet the preset difference relationship. Therefore, a reflection peak parameter corresponding to a test optical signal, reflected by the first optical reflector, that is transmitted in each optical fiber is different. The reflection peak parameters corresponding to the test optical signals separately reflected by the N first optical reflectors may be identified based on the difference relationship between the optical fiber lengths of the N optical fibers. There is a plurality of implementations for the difference relationship between the optical fiber lengths of the N optical fibers. For example, the optical fiber lengths of the N optical fibers are in an arithmetic sequence, or the optical fiber lengths of the N optical fibers are distributed in a specific difference manner.

For example, the optical distribution apparatus includes one input port and M output ports. N first optical reflectors are connected to N of the M output ports in a pluggable manner. The N output ports are respectively an output port 1, an output port 2, ..., and an output port N. An optical fiber length of the output port 1 is L. An optical fiber length of the output port 2 is a longer than that of the output port 1, so that the optical fiber length of the output port 2 is L+a. Therefore, on a corresponding OTDR detection curve, a reflection peak position corresponding to the output port 2 differs from a reflection peak position corresponding to the output port 1 by a. Correspondingly, an optical fiber length of the output port N is (N-1)^{∗}a longer than that of the output port 1. Therefore, on the corresponding OTDR detection curve, a reflection peak position corresponding to the output port N differs from the reflection peak position corresponding to the output port 1 by (N-1)^{∗}a. The N output ports of the optical distribution apparatus may be identified based on specific reflection peaks on the OTDR detection curve.

It should be noted that the differences between the optical fiber lengths separately corresponding to the N output ports are in an arithmetic sequence, which is merely an implementation. The differences between the optical fiber lengths separately corresponding to the N output ports may alternatively meet another preset relationship, and an output port corresponding to each reflection peak may be identified. This is not limited.

In some embodiments of this application, the test optical signals separately reflected by the N first optical reflectors have different wavelengths.

The wavelengths corresponding to the test optical signals separately reflected by the N first optical reflectors are used to distinguish the different output ports.

Specifically, the N first optical reflectors respectively inserted into the N output ports in the optical distribution apparatus may reflect test optical signals with different wavelengths. The N first optical reflectors have different reflection functions. The optical detection device successively inputs the test optical signals with different wavelengths to the optical distribution apparatus, and each of the N optical reflectors in the optical distribution apparatus may reflect a test optical signal with one wavelength. The different output ports are distinguished based on the wavelengths corresponding to the test optical signals separately reflected by the N first optical reflectors. When a first optical reflector is removed from a corresponding output port, the removed first optical reflector may be determined through the optical detection device. Therefore, an output port that needs to be connected to an external optical fiber in the optical distribution apparatus is identified according to a correspondence between the first optical reflector and the output port connected to the first optical reflector.

For example, the optical distribution apparatus includes one input port and M output ports. N first optical reflectors are respectively connected to N of the M output ports in a pluggable manner. The N output ports are respectively an output port 1, an output port 2, ..., and an output port N. An optical signal wavelength corresponding to the output port 1 is lamda 1. Therefore, the output port 1 has a reflection peak at a wavelength of lamda 1 on a corresponding OTDR detection curve. Correspondingly, an optical signal wavelength corresponding to the output port N is lamda N. Therefore, the output port N has a reflection peak at a wavelength of lamda N on the corresponding OTDR detection curve. The output port corresponding to each reflection peak may be identified based on a wavelength, of a specific reflected optical signal, that is on the OTDR detection curve.

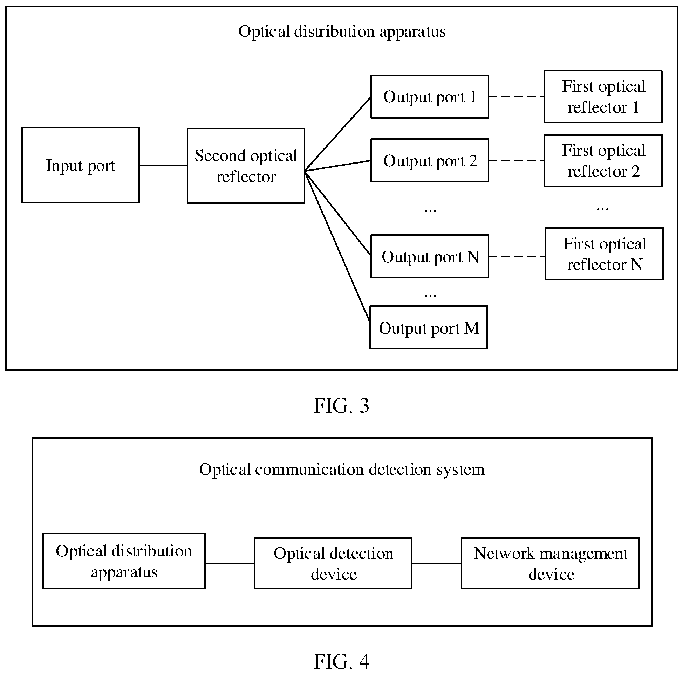

In some embodiments of this application, as shown in FIG. 3, the optical distribution apparatus further includes a second optical reflector.

The second optical reflector is connected to the input port. A second reflection peak of a test optical signal that enters the input port and that is reflected by the second optical reflector is used to identify a first reflection peak of the test optical signal reflected by the first optical reflector.

The second optical reflector is further disposed between the input port and the N output ports in the optical distribution apparatus. A test optical signal generated by the optical detection device is transmitted to the second optical reflector after passing through the input port, and the second optical reflector may transmit the test optical signal to the N output ports. The N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

In some embodiments of this application, the optical distribution apparatus further includes an optical splitting module.

One port of the optical splitting module is connected to the input port, and other M ports of the optical splitting module are respectively connected to the M optical fibers.

The optical distribution apparatus may include the optical splitting module. The optical splitting module is a module that performs optical splitting in the optical distribution apparatus. A port of the optical splitting module is connected to the input port. A test optical signal transmitted through the input port of the optical distribution apparatus may be divided into M test optical signals by the optical splitting module. The other M ports of the optical splitting module are respectively connected to the M optical fibers, so that the M test optical signals may be transmitted to the M output ports. For example, after a first optical reflector inserted into an output port is removed, another first optical reflector that is not removed may reflect the test optical signal. After being reflected by a first optical reflector inserted into an output port, the test optical signal is transmitted to the optical splitting module. The optical splitting module sends, to the optical detection device, the test optical signal reflected by the first optical reflector that is of the N first optical reflectors and that is not removed. In this embodiment of this application, the optical splitting module may be disposed in the optical distribution apparatus, and an optical signal may be separated and transmitted through the optical splitting module.

In some embodiments of this application, the optical distribution apparatus includes M input ports.

The optical distribution apparatus is separately connected to M ports of an optical splitter through the M input ports.

The optical splitter may further be externally connected to the optical distribution apparatus. In other words, the optical splitter is a component independent of the optical distribution apparatus. After the test optical signal generated by the optical detection device is transmitted to the optical splitter, the optical splitter has M ports, and the optical distribution apparatus has M input ports, so that the optical distribution apparatus is separately connected to the M ports of the optical splitter through the M input ports. After first optical reflectors inserted into one or more output ports in the optical distribution apparatus are removed, a remaining first optical reflector that is not removed may reflect the test optical signal. After being reflected by the first optical reflector inserted into the output port of the optical distribution apparatus, the test optical signal is transmitted to the optical splitter. The optical splitter sends, to the optical detection device, the test optical signal reflected by the first optical reflector that is of the N first optical reflectors and that is not removed. In this embodiment of this application, the optical signal may be separated and transmitted through the optical splitter externally connected to the optical distribution apparatus.

It can be learned from the example description of this application in the foregoing embodiment that, the optical distribution apparatus includes the input port, the M output ports, and the N first optical reflectors. M is greater than or equal to N. N is a positive integer. The input port is separately connected to the M output ports through the M optical fibers. One of the N first optical reflectors is connected to one of the M output ports in a pluggable manner. Each of the N first optical reflectors is configured to reflect the test optical signal entering the corresponding output port. In this embodiment of this application, the N first optical reflectors are connected to the N output ports in a pluggable manner. Therefore, a first optical reflector may be inserted into an output port, or may be removed from the output port, to implement a dynamic connection between the first optical reflector and the output port. Each first optical reflector is connected to an output port in a pluggable manner. Therefore, the N first optical reflectors may be removed from the output ports. A removed first optical reflector cannot reflect a test optical signal entering a corresponding output port. In other words, the output port from which the first optical reflector is removed may be identified based on the fact that the removed first optical reflector does not reflect the test optical signal. Therefore, an output port of the optical distribution apparatus may be accurately identified in this embodiment of this application.

The foregoing embodiments describe the optical distribution apparatus provided in the embodiments of this application. The following describes an optical communication detection system to which the optical distribution apparatus is applied. As shown in FIG. 4, an embodiment of this application further provides an optical communication detection system. The optical communication detection system includes an optical distribution apparatus, an optical detection device and a network management device.

The optical detection device is configured to send a test optical signal to the optical distribution apparatus.

The optical distribution apparatus is configured to reflect the test optical signal through a first optical reflector in the optical distribution apparatus. The optical distribution apparatus has M output ports and N first optical reflectors. M is greater than or equal to N. M and N are positive integers. One of the N first optical reflectors is connected to one of the M output ports in a pluggable manner.

The optical detection device is further configured to receive the test optical signal reflected by the first optical reflector, and send a reflected optical signal parameter corresponding to the test optical signal reflected by the first optical reflector to the network management device.

The network management device is configured to receive the reflected optical signal parameter, corresponding to the test optical signal reflected by the first optical reflector, that is sent by the optical detection device, and identify an output port of the optical distribution apparatus based on the reflected optical signal parameter corresponding to the test optical signal reflected by the first optical reflector.

The optical distribution apparatuses described in FIG. 2 and FIG. 3 may be applied to the optical communication detection system. The optical communication detection system may be configured to detect an optical signal, to determine whether an output port in the optical distribution apparatus is correctly connected to an external optical fiber.

Specifically, the optical detection device refers to a device that can generate the test optical signal. The optical detection device may further receive, from the optical distribution apparatus, the test optical signal reflected by the first optical reflector. Then, the optical detection device may identify a reflection peak corresponding to the test optical signal reflected by the first optical reflector. For example, the optical detection device may be an OTDR. The optical detection device may generate an OTDR detection curve, and display, on the OTDR detection curve, the reflection peak corresponding to the test optical signal reflected by the first optical reflector. The optical detection device generates reflected optical signal parameters based on identified test optical signals separately reflected by the N first optical reflectors, and sends, to the network management device, the reflected optical signal parameters corresponding to the test optical signals separately reflected by the N first optical reflectors. The optical detection device may be an independent component, or may be integrated with another component in an optical communications system. This is not limited. For example, the optical detection device may be integrated with an OLT. To be specific, the OLT may include the optical detection device. For example, the OLT includes an OTDR component, configured to input the test optical signal to the optical distribution apparatus.

In some embodiments of this application, the reflected optical signal parameter is a parameter, of a reflected optical signal, that is generated by the optical detection device after the optical detection device receives, from the optical distribution apparatus, the test optical signal reflected by the first optical reflector. The reflected optical signal parameter may include a plurality of parameters of the reflected optical signal. For example, the reflected optical signal parameter may include a reflection peak strength of the test optical signal reflected by the first optical reflector. Alternatively, the reflected optical signal parameter includes a reflection peak position and a reflection peak strength corresponding to the reflection peak position. Alternatively, the reflected optical signal parameter includes wavelength information of the reflected optical signal. The reflection peak position refers to a position of a reflection peak on the OTDR detection curve. The reflection peak strength refers to an optical power strength of the reflection peak. A higher reflectivity of the first optical reflector indicates a stronger reflection peak strength corresponding to the optical signal. In addition, the reflected optical signal parameter may alternatively be the wavelength information of the reflected optical signal. A specific implementation of the reflected optical signal parameter is not limited herein.

The network management device is an output port identification device in the optical distribution apparatus. The network device may be connected to the optical detection device. The network management device is configured to receive the reflected optical signal parameters, corresponding to the test optical signals separately reflected by the N first optical reflectors, that are sent by the optical detection device, and identify N output ports based on the reflected optical signal parameters corresponding to the test optical signals separately reflected by the N first optical reflectors. The network management device may be an independent component, or may be integrated with another component in the optical communications system. This is not limited. For example, the network management device may be integrated with the OLT. To be specific, the OLT may include the network management device. An implementation of the network management device is not limited.

Specifically, the test optical signals separately reflected by the N first optical reflectors are used to distinguish the N output ports. Therefore, the network management device may identify the N output ports based on the reflected optical signal parameters corresponding to the received test optical signals separately reflected by the N first optical reflectors.

In some embodiments of this application, the optical detection device is configured to send a first test optical signal to the optical distribution apparatus.

The optical distribution apparatus is configured to separately reflect the first test optical signal through the N first optical reflectors in the optical distribution apparatus.

The optical detection device is further configured to receive first test optical signals separately reflected by the N first optical reflectors, and send reflected optical signal parameters corresponding to the first test optical signals separately reflected by the N first optical reflectors to the network management device.

The network management device is further configured to receive the reflected optical signal parameters, corresponding to the first test optical signals separately reflected by the N first optical reflectors, that are sent by the optical detection device, and detect a status of optical fiber links between the optical detection device and the N output ports of the optical distribution apparatus based on the reflected optical signal parameters corresponding to the first test optical signals separately reflected by the N first optical reflectors.

After the optical distribution apparatus is connected to the optical detection device and the network management device, the optical detection device in this embodiment of this application may send the test optical signal to the optical distribution apparatus. The N first optical reflectors are connected to the N output ports in the optical distribution apparatus in a pluggable manner. The N first optical reflectors may reflect the test optical signal. Therefore, the network management device may detect the status of the optical fiber links between the optical detection device and the N output ports of the optical distribution apparatus based on the reflected optical signal parameters corresponding to the first test optical signals separately reflected by the N first optical reflectors, to detect whether a loss of the optical fiber links between the optical detection device and the N output ports in the optical distribution apparatus is normal. In this embodiment of this application, the first optical reflectors reflect the test optical signal. A variation of reflection peak strengths of test optical signals reflected by the first optical reflectors is used to determine whether the loss of the optical fiber links between the optical detection device and the N output ports in the optical distribution apparatus is normal. A normal loss of the optical fiber links indicates that construction acceptance of the optical distribution apparatus succeeds. An abnormal loss of the optical fiber links indicates that the construction acceptance of the optical distribution apparatus fails. It may be understood that whether the loss of the optical fiber links is normal may be determined based on a specific loss threshold.

In some embodiments of this application, the reflected optical signal parameter includes a reflection peak strength of the first test optical signal reflected by the first optical reflector.

The network management device is configured to: when reflection peak strengths corresponding to the first test optical signals separately reflected by the N first optical reflectors are lower than a first threshold, determine that a status of an optical fiber link between the optical detection device and an input port of the optical distribution apparatus is abnormal, or when the reflection peak strengths corresponding to the first test optical signals separately reflected by the N first optical reflectors are lower than a second threshold, determine that a status of optical fiber links between the input port and the N output ports of the optical distribution apparatus is abnormal, or when the reflection peak strengths corresponding to the first test optical signals separately reflected by the N first optical reflectors are greater than or equal to the first threshold, determine that the status of the optical fiber links between the optical detection device and the N output ports of the optical distribution apparatus is normal. The second threshold is less than the first threshold.

For example, the network management device calculates a reflection peak position of the test optical signal reflected by each first optical reflector, and determines whether the loss of the optical fiber links is normal by comparing an actually measured reflection peak strength with a pre-stored reflection peak strength. A reflection peak strength of the test optical signal sent by the optical detection device is x dB, indicating that the optical fiber links and the optical distribution apparatus are normal. The optical detection device detects that a reflection peak strength of the test optical signal reflected by the output port is x'. If x' slightly decreases relative to x, for example, x' is less than a first threshold W1 compared with a normal reflection peak strength x, it is determined that previous optical fiber links of the optical distribution apparatus are faulty. In other words, the status of the optical fiber link between the optical detection device and the input port of the optical distribution device is abnormal. When the optical detection device detects that the reflection peak strength x' reflected by the output port is greater than or equal to the first threshold W1, it is determined that the status of the optical fiber links between the optical detection device and the N output ports of the optical distribution apparatus is normal. When the optical detection device detects that the reflection peak strength x' reflected by the output port decreases greatly, for example, x' is less than a second threshold W2 compared with the normal reflection peak strength x, it is determined that an optical path in the optical distribution apparatus is faulty. In other words, the status of the optical fiber links between the input port and the N output ports of the optical distribution apparatus is abnormal. The first threshold W1 and the second threshold W2 may be determined based on a type of an optical component and an optical fiber link structure. The optical component refers to a physical link, an optical fiber, an optical splitter, a connector, an adapter, or a combination thereof in optical fiber communication. According to the foregoing criteria, when the loss of the optical fiber links between the input port and the output ports is normal, it is determined that the construction acceptance of the optical distribution apparatus is qualified, and a database is updated based on an obtained result, to ensure smooth service provisioning. The first threshold and the second threshold are separately set, and the reflection peak strengths corresponding to the first test optical signals separately reflected by the N first optical reflectors are compared with the first threshold and the second threshold, to accept a construction quality of the output ports of the optical distribution apparatus without a manual operation. This improves efficiency of accepting the construction quality of the output ports of the optical distribution apparatus.

In some embodiments of this application, the optical detection device is configured to send a second test optical signal to the optical distribution apparatus.

The optical distribution apparatus is configured to separately reflect the second test optical signal through N-1 first optical reflectors in the optical distribution apparatus. The N-1 first optical reflectors are connected to N-1 of the M output ports. A first optical reflector that is of the N first optical reflectors and that is not connected to an output port cannot reflect the second test optical signal.

The optical detection device is further configured to receive second test optical signals separately reflected by the N-1 first optical reflectors, and send reflected optical signal parameters corresponding to the second test optical signals separately reflected by the N-1 first optical reflectors to the network management device.

The network management device is configured to receive the reflected optical signal parameters, corresponding to the second test optical signals separately reflected by the N-1 first optical reflectors, that are sent by the optical detection device, and identify, based on the reflected optical signal parameters corresponding to the second test optical signals separately reflected by the N-1 first optical reflectors, an output port from which a first optical reflector is removed in the optical distribution apparatus.

Specifically, when an output port in the optical distribution apparatus needs to be externally connected to an optical fiber, a first optical reflector inserted into the output port may be removed. For example, a first optical reflector inserted into a first output port is removed from the output port. The optical detection device may send, to the network management device, reflected optical signal parameters corresponding to test optical signals separately reflected by first optical reflectors that are of the N first optical reflectors and that are not removed. For example, one first optical reflector is removed, the remaining N-1 of the N first optical reflectors may still reflect the test optical signal to the optical detection device.

The network management device may further detect whether an output port under construction is correct. The network management device can communicate with the optical detection device, to receive the reflected optical signal parameters, corresponding to the test optical signals separately reflected by the first optical reflectors that are of the N first optical reflectors and that are not removed, that are sent by the optical detection device. The test optical signals separately reflected by the N first optical reflectors can be used to distinguish the N output ports. Therefore, the network management device determines, based on the reflected optical signal parameters corresponding to the test optical signals separately reflected by the first optical reflectors that are of the N first optical reflectors and that are not removed, whether the output port from which the first optical reflector is removed is a target output port. This avoids a case in which an external optical fiber may be connected to an incorrect output port in a construction process.

Further, in some embodiments of this application, the network management device is configured to: when a first optical reflector is removed from the target output port, obtain a reference reflected optical signal parameter corresponding to the target output port from a reference database of the network management device; determine, based on the reflected optical signal parameters corresponding to the second test optical signals separately reflected by the N-1 first optical reflectors, a reflected optical signal parameter corresponding to a disappeared reflected optical signal; and determine whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the output port from which the first optical reflector is removed in the optical distribution apparatus. If the reflected optical signal parameter corresponding to the disappeared reflected optical signal is different from the reference reflected optical signal parameter corresponding to the target output port, the network management device determines that the target output port is not the output port from which the first optical reflector is removed in the optical distribution apparatus.

The target output port of the optical distribution apparatus refers to an output port, notified to a constructor, to which an external optical fiber needs to be connected. The network management device may obtain the reference reflected optical signal parameter corresponding to the target output port from the reference database of the network management device. The reference database may be a local database of the network management device, or an external database of the network management device. The reference reflected optical signal parameter includes a standard parameter used to compare variations of a reflected optical signal parameter. The network management device receives the reflected optical signal parameters corresponding to the second test optical signals separately reflected by the first optical reflectors that are of the N first optical reflectors and that are not removed, to determine the reflected optical signal parameter corresponding to the disappeared reflected optical signal. Before a first optical reflector is removed, all the N first optical reflectors can reflect the second test optical signal. When the first optical reflector is removed from an output port, the second test optical signal cannot be reflected. Therefore, the network device may determine whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the first output port. If the reflected optical signal parameter corresponding to the disappeared reflected optical signal is different from the reference reflected optical signal parameter corresponding to the target output port, the network management device determines that the target output port is not the first output port. In this embodiment of this application, the output port of the optical distribution apparatus can be identified without a manual operation, to ensure a correct connection between the output port of the optical distribution apparatus and the external optical fiber.

Further, in some embodiments of this application, the reflected optical signal parameter includes the reflection peak position and the reflection peak strength corresponding to the reflection peak position. Alternatively, the reflected optical signal parameter includes the wavelength information of the reflected optical signal

The network management device may determine whether a reflection peak strength corresponding to the disappeared reflected optical signal is the same as a reference reflection peak strength corresponding to the target output port. If the reflection peak strength corresponding to the disappeared reflected optical signal is the same as the reference reflection peak strength corresponding to the target output port, the network management device determines that the target output port is the first output port. If the reflection peak strength corresponding to the disappeared reflected optical signal is different from the reference reflection peak strength corresponding to the target output port, the network management device determines that the target output port is not the first output port.

For example, based on a port number of a target output port, allocated in a work order, that needs to be constructed, a feature reflection peak reference of the target output port number is found in the reference database, and is denoted as A1. A feature reflection peak of an actually constructed output port is denoted as A2. After the construction is completed, because a first optical reflector of the constructed output port is removed, the reflection peak A2 disappears. It is determined whether A1 and A2 correspond to a same output port. If A1 and A2 are the same, the constructed output port is the same as the target output port allocated in the work order. If A1 and A2 are different, construction is not performed on the target output port allocated in the work order. In this case, the network management device may prompt that a port number for construction is incorrect. In this embodiment of this application, the network management device may automatically determine, by analyzing a reflection peak strength of the reflected optical signal, whether an output port in the optical distribution apparatus under construction is correctly selected, and no manual check is required. This improves efficiency of checking construction quality of the output port.

The network management device may determine whether wavelength information corresponding to the disappeared reflected optical signal is the same as reference wavelength information corresponding to the target output port. If the wavelength information corresponding to the disappeared reflected optical signal is the same as the reference wavelength information corresponding to the target output port, the network management device determines that the target output port is the first output port. If the wavelength information corresponding to the disappeared reflected optical signal is different from the reference wavelength information corresponding to the target output port, the network management device determines that the target output port is not the first output port.

For example, a port number of a target output port, allocated in the work order, that needs to be constructed is 2. Based on this, a reference of a feature wavelength reflection peak of the target output port is found in the reference database, and is denoted as A1. A feature wavelength reflection peak of an actually constructed output port is denoted as A2. After the construction is completed, because a first optical reflector of the constructed port is removed, the reflection peak A2 disappears. A reflection peak of another output port still exists. A feature wavelength of the output port 2 is lamda 2, and a wavelength of the disappeared feature reflection peak is lamda 2'. By comparison, if lamda 2' = lamda 2, based on the feature wavelength of the output port 2, it is determined that A1 and A2 correspond to a same output port. This indicates that the constructed output port is the same as the target output port allocated in the work order and the ports are verified to be consistent. In this embodiment of this application, the network management device may automatically determine, by analyzing the wavelength of the reflected optical signal, whether the output port in the optical distribution apparatus under construction is correctly selected, and no manual check is required. This improves efficiency of checking the construction quality of the output port.

In some embodiments of this application, the optical distribution apparatus further includes the input port and a second optical reflector. The second optical reflector is connected to the input port.

The network management device is configured to detect a second reflection peak of a test optical signal that enters the input port and that is reflected by the second optical reflector, and identify, based on the second reflection peak, a first reflection peak of the test optical signal reflected by the first optical reflector.

The second optical reflector is further disposed between the input port and the N output ports in the optical distribution apparatus. A test optical signal generated by the optical detection device is transmitted to the second optical reflector after passing through the input port, and the second optical reflector may transmit the test optical signal to the N output ports. The N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference point for identifying the first reflection peak, to quickly and accurately identify the first reflection peak of the test optical signal reflected by the first optical reflector, to improve efficiency of identifying the test optical signal reflected by the first optical reflector.

It can be learned from the example description in the foregoing embodiment, the optical communication detection system includes the optical distribution apparatus, the optical detection device, and the network management device. The optical distribution apparatus is configured to reflect the test optical signal through the first optical reflector in the optical distribution apparatus. One of the N first optical reflectors is connected to one of the M output ports in a pluggable manner. The optical detection device is further configured to receive the test optical signal reflected by the first optical reflector, and send the reflected optical signal parameter corresponding to the test optical signal reflected by the first optical reflector to the network management device. The network management device is configured to receive the reflected optical signal parameter, corresponding to the test optical signal reflected by the first optical reflector, that is sent by the optical detection device, and identify the output port of the optical distribution apparatus based on the reflected optical signal parameter corresponding to the test optical signal reflected by the first optical reflector. In the optical communication detection system provided in this embodiment of this application, a first optical reflector removed from the optical distribution apparatus cannot reflect the test optical signal. Therefore, the network management device may identify an output port from which the first optical reflector is removed based on the fact that the removed first optical reflector does not reflect the test optical signal. In this way, the output port of the optical distribution apparatus may be accurately identified in this embodiment of this application.

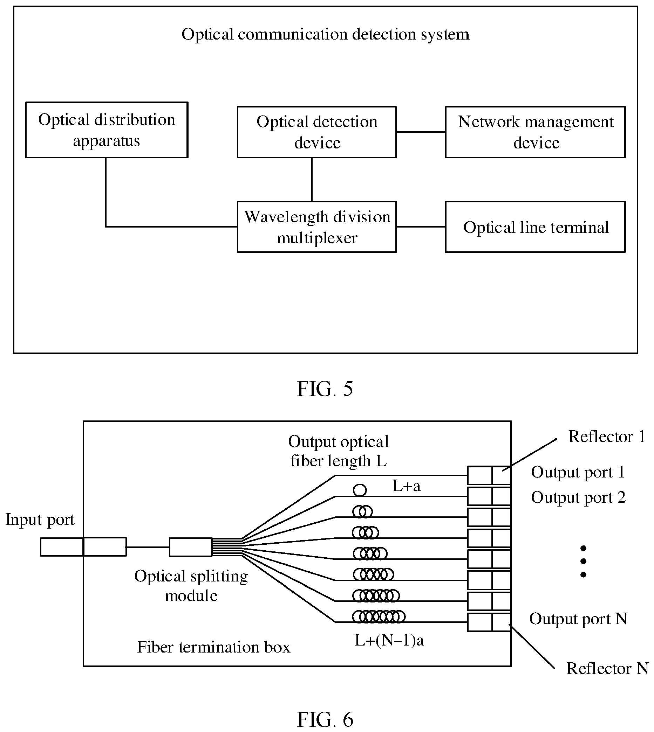

In some embodiments of this application, as shown in FIG. 5, the optical communication detection system provided in this embodiment of this application further includes a wavelength division multiplexer (wavelength division multiplexing, WDM) and an optical line terminal.

The wavelength division multiplexer is separately connected to the optical line terminal, the optical distribution apparatus, and the optical detection device.

Specifically, the wavelength division multiplexer is connected to the optical line terminal, and the wavelength division multiplexer is further connected to the optical distribution apparatus and the optical detection device. A test optical signal output by the optical detection device may be separately sent to the optical distribution apparatus and the optical line terminal through the wavelength division multiplexer. A test optical signal reflected by an optical reflector in the optical distribution apparatus is transmitted to the optical detection device through the wavelength division multiplexer. The optical detection device may receive, from the wavelength division multiplexer, the test optical signal reflected by the optical reflector in the optical distribution apparatus. In the optical communication detection system, the optical line terminal may communicate with the optical distribution apparatus through the wavelength division multiplexer.

Based on the optical communication detection system shown in FIG. 4 and FIG. 5, the following describes an optical communication detection method performed by an optical communication detection system according to an embodiment of this application. The optical communication detection method provided in this embodiment of this application includes the following steps.

Step S01: An optical detection device sends a test optical signal to an optical distribution apparatus.

The optical detection device refers to a device that can generate the test optical signal, and the optical detection device may be specifically an OTDR. After generating the test optical signal, the optical detection device may send the test optical signal to the optical distribution apparatus. The optical detection device may be an independent component, or may be integrated with another component in an optical communications system. This is not limited. For example, the optical detection device may be integrated with an OLT. To be specific, the OLT may include the optical detection device. For example, the OLT includes an OTDR component, configured to input the test optical signal to the optical distribution apparatus.

Step S02: The optical distribution apparatus reflects the test optical signal through a first optical reflector in the optical distribution apparatus.

The optical distribution apparatus has M output ports and N first optical reflectors. M is greater than or equal to N. N is a positive integer. One of the N first optical reflectors is connected to one of the M output ports in a pluggable manner.

The N optical reflectors in the optical distribution apparatus may reflect the test optical signal. The optical distribution apparatus sends, to the optical detection device, test optical signals separately reflected by the N optical reflectors in the optical distribution apparatus. The test optical signals separately reflected by the N optical reflectors are used to distinguish N output ports. For details, refer to the detailed description of distinguishing the N output ports based on the transmitted test optical signals in the foregoing embodiment. Details are not described herein again.

Step S03: The optical detection device receives the test optical signal reflected by the first optical reflector, and sends a reflected optical signal parameter corresponding to the test optical signal reflected by the first optical reflector to a network management device.

In this embodiment of this application, the optical detection device may receive the test optical signals, separately reflected by the N optical reflectors, that are sent by the optical distribution apparatus. Then, the optical detection device generates reflected optical signal parameters based on the identified test optical signals separately reflected by the N optical reflectors, and sends, to the network management device, the reflected optical signal parameters corresponding to the test optical signals separately reflected by the N optical reflectors.

Step S04: The network management device receives the reflected optical signal parameter, corresponding to the test optical signal reflected by the first optical reflector, that is sent by the optical detection device.

The network management device is an output port identification device in the optical distribution apparatus. The network device may be connected to the optical detection device. The network management device receives the reflected optical signal parameters, corresponding to the test optical signals separately reflected by the N optical reflectors, that are sent by the optical detection device.

Step S05: The network management device identifies an output port of the optical distribution apparatus based on the reflected optical signal parameter corresponding to the test optical signal reflected by the first optical reflector.

The network device identifies the N output ports based on the reflected optical signal parameters corresponding to the test optical signals separately reflected by the N optical reflectors. Specifically, the test optical signals separately reflected by the N optical reflectors are used to distinguish the N output ports. Therefore, the network management device may identify the N output ports based on the reflected optical signal parameters corresponding to the received test optical signals separately reflected by the N optical reflectors. The network management device may be an independent component, or may be integrated with another component in the optical communications system. This is not limited. For example, the network management device may be integrated with the OLT. To be specific, the OLT may include the network management device. An implementation of the network management device is not limited.

For specific examples of the step S01 to the step S05, refer to function descriptions of the optical distribution apparatus, the optical detection device, and the network management device in the optical detection system shown in FIG. 4. Details are not described herein again.

In some embodiments of this application, that the network management device identifies an output port of the optical distribution apparatus based on the reflected optical signal parameter corresponding to the test optical signal reflected by the first optical reflector includes the following step:

When the network management device receives reflected optical signal parameters, corresponding to first test optical signals separately reflected by the N first optical reflectors, that are sent by the optical detection device, the network management device detects a status of optical fiber links between the optical detection device and the N output ports of the optical distribution apparatus based on the reflected optical signal parameters corresponding to the first test optical signals separately reflected by the N first optical reflectors.

After the optical distribution apparatus is connected to the optical detection device and the network management device, the optical detection device in this embodiment of this application may send the test optical signal to the optical distribution apparatus. The N first optical reflectors are connected to the N output ports in the optical distribution apparatus in a pluggable manner. The N first optical reflectors may reflect the test optical signal. Therefore, the network management device may detect the status of the optical fiber links between the optical detection device and the N output ports of the optical distribution apparatus based on the reflected optical signal parameters corresponding to the first test optical signals separately reflected by the N first optical reflectors, to detect whether a loss of the optical fiber links between the optical detection device and the N output ports in the optical distribution apparatus is normal. In this embodiment of this application, the first optical reflectors reflect the test optical signal. A variation of reflection peak strengths of test optical signals reflected by the first optical reflectors is used to determine whether the loss of the optical fiber links between the optical detection device and the N output ports in the optical distribution apparatus is normal. A normal loss of the optical fiber links indicates that construction acceptance of the optical distribution apparatus succeeds. An abnormal loss of the optical fiber links indicates that the construction acceptance of the optical distribution apparatus fails. It may be understood that whether the loss of the optical fiber links is normal may be determined based on a specific loss threshold.

In some embodiments of this application, the reflected optical signal parameter includes a reflection peak strength of the first test optical signal reflected by the first optical reflector.

That the network management device detects a status of optical fiber links between the optical detection device and the N output ports of the optical distribution apparatus based on the reflected optical signal parameters corresponding to the first test optical signals separately reflected by the N first optical reflectors includes the following steps:

When reflection peak strengths corresponding to the first test optical signals separately reflected by the N first optical reflectors are lower than a first threshold, the network management device determines that a status of an optical fiber link between the optical detection device and an input port of the optical distribution apparatus is abnormal.

Alternatively, when the reflection peak strengths corresponding to the first test optical signals separately reflected by the N first optical reflectors are lower than a second threshold, the network management device determines that a status of optical fiber links between the input port and the M output ports of the optical distribution apparatus is abnormal.

Alternatively, when the reflection peak strengths corresponding to the first test optical signals separately reflected by the N first optical reflectors are greater than or equal to the first threshold, the network management device determines that the status of the optical fiber links between the optical detection device and the M output ports of the optical distribution apparatus is normal. The second threshold is less than the first threshold.

For example, the network management device calculates a reflection peak position of the test optical signal reflected by each first optical reflector, and determines whether the loss of the optical fiber links is normal by comparing an actually measured reflection peak strength with a pre-stored reflection peak strength. The optical detection device detects that a reflection peak strength of the test optical signal reflected by the output port is x'. If x' slightly decreases relative to x, for example, x' is less than a first threshold W1 compared with a normal reflection peak strength x, it is determined that previous optical fiber links of the optical distribution apparatus are faulty. In other words, the status of the optical fiber link between the optical detection device and the input port of the optical distribution device is abnormal. When the optical detection device detects that the reflection peak strength x' reflected by the output port is greater than or equal to the first threshold W1, it is determined that the status of the optical fiber links between the optical detection device and the N output ports of the optical distribution apparatus is normal. When the optical detection device detects that the reflection peak strength x' reflected by the output port decreases greatly, and x' is less than a second threshold W2 compared with the normal reflection peak strength x, it is determined that an optical path in the optical distribution apparatus is faulty. In other words, the status of the optical fiber links between the input port and the N output ports of the optical distribution apparatus is abnormal. When the loss of the optical fiber links between the input port and the output ports is normal, it is determined that the construction acceptance of the optical distribution apparatus is qualified, and a database is updated based on an obtained result, to ensure smooth provisioning of a service of externally connecting the optical distribution apparatus to an optical fiber.

Further, in some embodiments of this application, that the network management device identifies an output port of the optical distribution apparatus based on the reflected optical signal parameter corresponding to the test optical signal reflected by the first optical reflector includes the following step:

When the network management device receives reflected optical signal parameters, corresponding to second test optical signals separately reflected by N-1 first optical reflectors, that are sent by the optical detection device, the network management device identifies, based on the reflected optical signal parameters corresponding to the second test optical signals separately reflected by the N-1 first optical reflectors, an output port from which a first optical reflector is removed in the optical distribution apparatus.

The N-1 first optical reflectors are connected to N-1 of the M output ports. A first optical reflector that is of the N first optical reflectors and that is not connected to an output port cannot reflect the second test optical signal.

Specifically, when an output port in the optical distribution apparatus needs to be externally connected to an optical fiber, a first optical reflector inserted into the output port may be removed. For example, a first optical reflector inserted into a first output port is removed from the output port. The optical detection device may send, to the network management device, reflected optical signal parameters corresponding to test optical signals separately reflected by first optical reflectors that are of the N first optical reflectors and that are not removed. For example, one first optical reflector is removed, the remaining N-1 of the N first optical reflectors may still reflect the test optical signal to the optical detection device.

The network management device may further detect whether an output port under construction is correct. The network management device can communicate with the optical detection device, to receive the reflected optical signal parameters, corresponding to the test optical signals separately reflected by the first optical reflectors that are of the N first optical reflectors and that are not removed, that are sent by the optical detection device. The test optical signals separately reflected by the N first optical reflectors can be used to distinguish the N output ports. Therefore, the network management device determines, based on the reflected optical signal parameters corresponding to the test optical signals separately reflected by the first optical reflectors that are of the N first optical reflectors and that are not removed, whether the output port from which the first optical reflector is removed is a target output port. This avoids a case in which an external optical fiber may be connected to an incorrect output port in a construction process.

Further, in some embodiments of this application, that the network management device identifies, based on the reflected optical signal parameters corresponding to the second test optical signals separately reflected by the N-1 first optical reflectors, an output port from which a first optical reflector is removed in the optical distribution apparatus includes the following steps:

When a first optical reflector needs to be removed from the target output port in the optical distribution apparatus, the network management device obtains a reference reflected optical signal parameter corresponding to the target output port from a reference database of the network management device.

The network management device determines, based on the reflected optical signal parameters corresponding to the second test optical signals separately reflected by the N-1 first optical reflectors, a reflected optical signal parameter corresponding to a disappeared reflected optical signal.

The network management device determines whether the reflected optical signal parameter corresponding to the disappeared reflected optical signal is the same as the reference reflected optical signal parameter corresponding to the target output port.

If the reflected optical signal parameter corresponding to the disappeared reflected optical signal is the same as the reference reflected optical signal parameter corresponding to the target output port, the network management device determines that the target output port is the output port from which the first optical reflector is removed in the optical distribution apparatus.

If the reflected optical signal parameter corresponding to the disappeared reflected optical signal is different from the reference reflected optical signal parameter corresponding to the target output port, the network management device determines that the target output port is not the output port from which the first optical reflector is removed in the optical distribution apparatus.

The target output port of the optical distribution apparatus refers to an output port, notified to a constructor, to which an external optical fiber needs to be connected. The network management device may obtain the reference reflected optical signal parameter corresponding to the target output port from the reference database. The reference database may be a local database of the network management device, or an external database of the network management device. The reference reflected optical signal parameter includes a standard parameter used to compare variations of a reflected optical signal parameter. The network management device receives the reflected optical signal parameters corresponding to the second test optical signals separately reflected by the first optical reflectors that are of the N first optical reflectors and that are not removed, to determine the reflected optical signal parameter corresponding to the disappeared reflected optical signal. Before a first optical reflector is removed, all the N first optical reflectors can reflect the second test optical signal. When the first optical reflector is removed from an output port, the second test optical signal cannot be reflected. Therefore, the network device may determine whether the reflected optical signal parameter corresponding to the disappeared reflected optical signal is the same as the reference reflected optical signal parameter corresponding to the target output port. If the reflected optical signal parameter corresponding to the disappeared reflected optical signal is the same as the reference reflected optical signal parameter corresponding to the target output port, the network management device determines that the target output port is the first output port. If the reflected optical signal parameter corresponding to the disappeared reflected optical signal is different from the reference reflected optical signal parameter corresponding to the target output port, the network management device determines that the target output port is not the first output port.

In some embodiments of this application, the reflected optical signal parameter includes a reflection peak position and a reflection peak strength corresponding to the reflection peak position. Alternatively, the reflected optical signal parameter includes wavelength information of a reflected optical signal.

In some embodiments of this application, the optical distribution apparatus further includes the input port and a second optical reflector. The second optical reflector is connected to the input port. The method provided in this embodiment of this application further includes the following steps:

The network management device detects a second reflection peak of a test optical signal that enters the input port and that is reflected by the second optical reflector.

The network management device identifies, based on the second reflection peak, a first reflection peak of the test optical signal reflected by the first optical reflector.

The second optical reflector is further disposed between the input port and the N output ports in the optical distribution apparatus. A test optical signal generated by the optical detection device is transmitted to the second optical reflector after passing through the input port, and the second optical reflector may transmit the test optical signal to the N output ports. The N first optical reflectors are respectively inserted into the N output ports. The second optical reflector is disposed between the input port and the N output ports. The second optical reflector reflects the test optical signal. For example, the second optical reflector reflects the test optical signal that enters the input port. The second reflection peak is generated in the reflected test optical signal. When the test optical signal enters the N output ports, the N first optical reflectors reflect the test optical signal, and first reflection peaks are generated in reflected test optical signals. The second reflection peak of the test optical signal reflected by the second optical reflector may be used to identify the first reflection peak. For example, the second reflection peak may be used as a reference, to quickly and accurately identify the first reflection peak of the test optical signal reflected by the first optical reflector, to improve efficiency of identifying the test optical signal reflected by the first optical reflector.

It can be learned from the example description in the foregoing embodiment that, the network management device receives the reflected optical signal parameter, corresponding to the test optical signal reflected by the first optical reflector, that is sent by the optical detection device. The test optical signal reflected by the first optical reflector is sent by the optical distribution apparatus to the optical detection device. The test optical signal is sent by the optical detection device to the optical distribution apparatus. The optical distribution apparatus has M output ports and N first optical reflectors. M is greater than or equal to N. One of the N first optical reflectors is connected to one of the M output ports in a pluggable manner. The output port of the optical distribution apparatus is identified based on the reflected optical signal parameter corresponding to the test optical signal reflected by the first optical reflector. In the optical communication detection system provided in this embodiment of this application, a first optical reflector removed from the optical distribution apparatus cannot reflect the test optical signal. Therefore, the network management device may identify an output port from which the first optical reflector is removed based on the fact that the removed first optical reflector does not reflect the test optical signal. In this way, the output port of the optical distribution apparatus may be accurately identified in this embodiment of this application.

To better understand and implement the foregoing solutions in the embodiments of this application, the following uses a corresponding application scenario as an example for specific description.

According to an embodiment of this application, the following describes in detail output port acceptance and output port verification of an optical distribution apparatus in an optical communication detection system. The optical distribution apparatus is specifically a fiber access terminal or a fiber termination box. An optical reflector is referred to as a reflector for short. An optical detection device is specifically an OTDR.

In this embodiment of this application, there are M output ports in the optical distribution apparatus. The optical distribution apparatus includes N reflectors connected to N output ports in a pluggable manner. M is greater than or equal to N. Subsequently, an example in which M is equal to N is used for description. To be specific, the N reflectors are respectively inserted into the N output ports of the optical distribution apparatus. The OTDR may be used to perform construction quality acceptance and output port verification of the fiber termination box. For example, a fiber termination box with an optical splitter may be used, or the optical splitter is externally connected to the fiber termination box. Output ports of the fiber termination box are distinguished based on different optical fiber lengths. The output port of the fiber termination box is provided with a dustproof cap with a reflector.

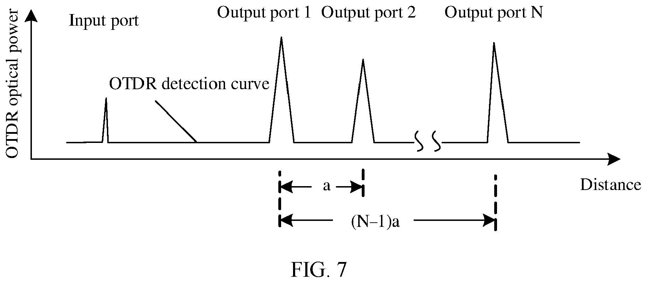

As shown in FIG. 6, the fiber termination box includes the optical splitter. An optical fiber length of an output port 1 is L, an optical fiber length of an output port 2 is L+a, ..., and an optical fiber length of an output port N is L+(N-1)a. As shown in FIG. 7, the optical fiber length of the output port 2 is a longer than that of the output port 1. Therefore, on a corresponding OTDR detection curve, a reflection peak position corresponding to the output port 2 differs from a reflection peak position corresponding to the output port 1 by a. Correspondingly, the optical fiber length of the output port N is (N-1)^{∗}a longer than that of the output port 1. Therefore, on the corresponding OTDR detection curve, a reflection peak position corresponding to the output port N differs from the reflection peak position corresponding to the output port 1 by (N-1)^{∗}a. In this way, the output port of the fiber termination box may be identified based on a specific reflection peak on the OTDR detection curve.

Specifically, each output port of the fiber termination box is provided with the dustproof cap with a reflector. All or part of an OTDR test optical signal may be reflected.

For example, a reflectivity of the reflector is x dB. The reflectivity is related to a quality of a link between the reflector and the OTDR. As the quality of the link deteriorates, the reflectivity decreases. The reflectivity may be used as a criterion for determining a loss of an optical fiber link.

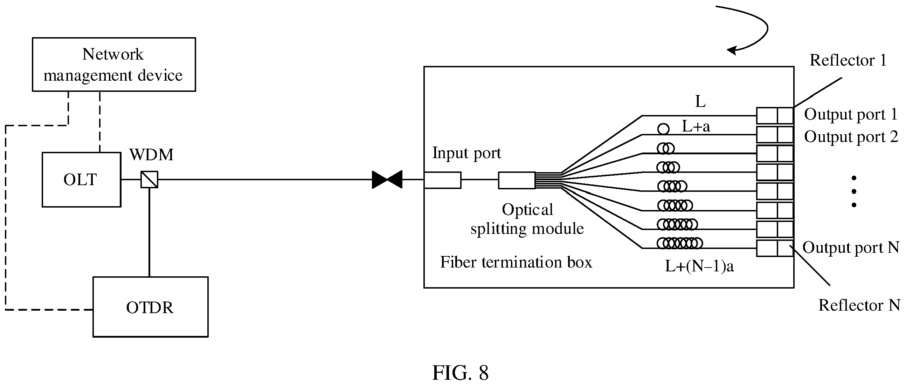

As shown in FIG. 8, an optical communication detection system may include the fiber termination box, a WDM, the OTDR, an OLT, and a network management device. The WDM is separately connected to the OLT, the OTDR, and the fiber termination box. The OTDR is connected to the network management device. The network management device may also be referred to as a network management system. After the fiber termination box is constructed, the OTDR sends a test optical signal. The test optical signal is connected to a feeder optical cable through the WDM. After the test optical signal is transmitted along the optical cable to the optical splitter (which may also be an optical splitting module) in the fiber termination box, the optical splitter transmits the test optical signal to N transmitters. The N reflectors reflect the test optical signal at specific reflectivities. Reflected optical signals are returned along the optical fiber to an optical test device (namely, the OTDR) on an OLT side. The optical test device receives the reflected optical signals, records receiving time (or receiving distances) and reflection peak strengths of the reflected optical signals, and reports the receiving time (or the receiving distances) and the reflection peak strengths to the network management device. For example, a reflection peak power corresponding to the output port 1 of the fiber termination box is measured to be x' dB, and is reported to the network management device.

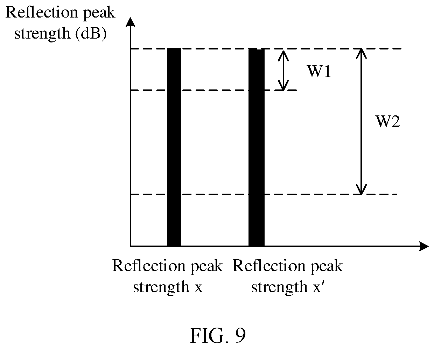

The network management device calculates a distance of each reflector, and compares an actually measured reflectivity with a theoretical value, to determine an optical fiber link status. As shown in FIG. 9, the reflectivity is x dB, indicating that the optical fiber link and the fiber termination box are normal. When a detected reflectivity x' of an optical signal reflected by a reflector of an output port slightly decreases relative to x, for example, x' is less than a threshold W1 compared with a normal reflection peak strength x, it is determined that a previous optical fiber link of the fiber termination box is faulty. When the detected reflectivity x' decreases greatly, and x' is less than a threshold W2 compared with the normal reflection peak strength x, it is determined that an optical path of the fiber termination box is faulty. The thresholds W1 and W2 are determined based on a type of an optical component and an optical fiber link structure. The optical component refers to a physical link, an optical fiber, an optical splitter, a connector, an adapter, or a combination thereof in optical fiber communication. According to the foregoing criteria, the fiber termination box is normal, a loss of the previous optical fiber link connected to the fiber termination box is normal, and construction acceptance is qualified. A database is updated based on an obtained result.

It can be learned from the foregoing examples that, in this embodiment of this application, a pre-test on a previous optical cable loss of the output port 1 of the fiber termination box is completed, and construction acceptance is performed on the output port, to ensure smooth service provisioning. According to the foregoing acceptance process for the output port 1, construction acceptance of the output port 2 and an output port 3 to the output port N may be completed in sequence according to the process.

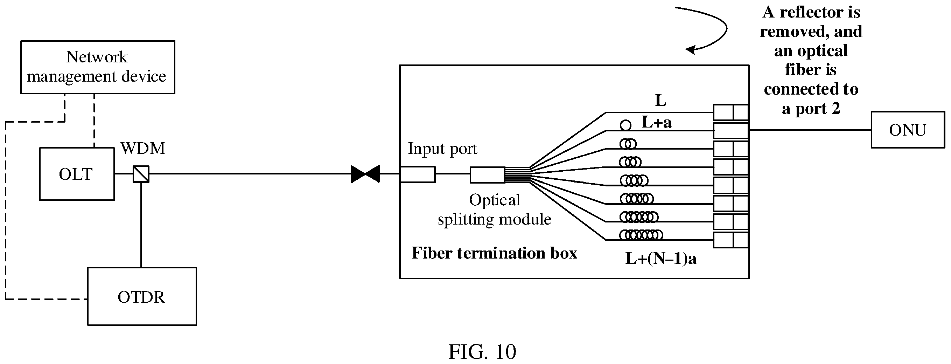

As shown in FIG. 10, when the optical fiber is connected to the output port of the fiber termination box, the construction personnel receive a work order requesting to connect a terminal user to the output port 2 of the fiber termination box. The construction personnel perform patching on the output port (port) 2 of the fiber termination box, removes the dustproof cap and the reflector corresponding to the port, and connects a corresponding optical cable.

The OTDR is started at a central office for detection. The central office refers to the OLT side. A position and a strength of a reflection peak of each output port of the fiber terminal box is identified. A distance between a corresponding output port of the fiber termination box and the OTDR may be obtained based on the position of the reflection peak. A corresponding port number may be identified based on a preset feature distance. After the construction, disappearance of a feature reflection peak strength is used to verify a constructed port number with a port number allocated in the work order and is saved to the database.

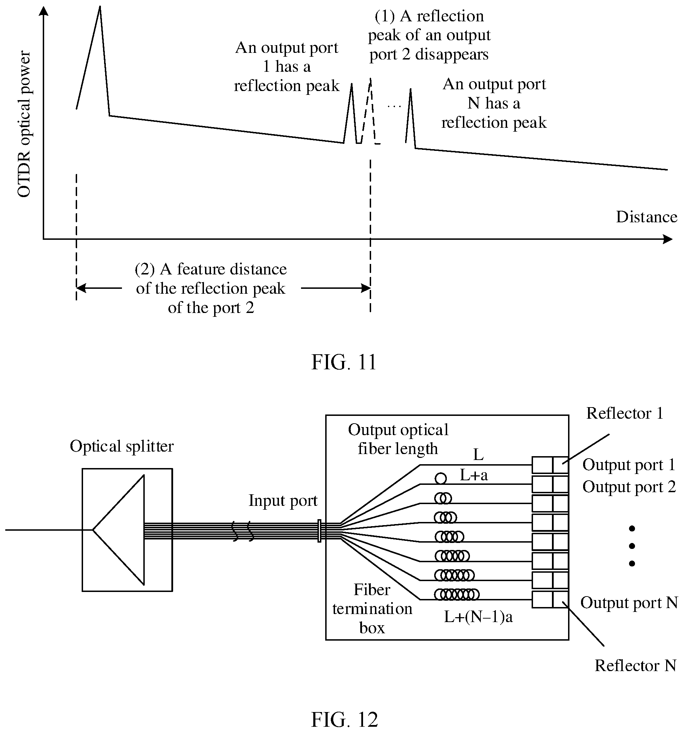

A verification process is as follows: Based on a port number 2 of a target constructed port allocated in the work order, a reference of a feature reflection peak of a target port in found in the reference database, and is denoted as A1. A feature reflection peak of an actual constructed port is denoted as A2. After the construction is completed, because a reflector of the constructed port is removed, the reflection peak A2 disappears. A reflection peak of another output port still exists, as shown in FIG. 11. After the construction is completed, a distance, between each port and the OTDR, that is obtained after an OTDR test is started is different. The distance is used as an initial reference. Different distances are features of different ports. A feature distance of the output port 2 is D1, and a distance of a disappeared feature reflection peak is D2. By comparison, it is found that D2 = D1. Based on the feature distance of the output port 2, it is determined that A1 and A2 correspond to a same output port. This indicates that the constructed port is the same as the target port allocated in the work order and the ports are verified to be consistent.

In some other embodiments of this application, the OTDR may be used to perform construction quality acceptance and output port verification on the fiber termination box. The output ports of the fiber termination box are distinguished based on different lengths of stored optical fibers. The output port of the fiber termination box is provided with the dustproof cap with a reflector. An input port of the fiber termination box is a multi-core optical cable, and is connected to an output port of the optical splitter.

As shown in FIG. 12, the fiber termination box includes the optical splitter. The optical fiber length of the output port 1 is L, the optical fiber length of the output port 2 is L+a, ..., and the optical fiber length of the output port N is L+(N-1)a. The fiber termination box is externally connected to the optical splitter. As shown in FIG. 7, inside the fiber termination box, the optical fiber length of the output port 1 is L. The optical fiber length of the output port 2 is a longer than that of the output port 1. Therefore, on the corresponding OTDR detection curve, the reflection peak position corresponding to the output port 2 differs from the reflection peak position corresponding to the output port 1 by a. Correspondingly, the optical fiber length of the output port N is (N-1)^{∗}a longer than that of the output port 1. Therefore, on the corresponding OTDR detection curve, the reflection peak position corresponding to the output port N differs from the reflection peak position corresponding to the output port 1 by (N-1)^{∗}a. In this way, the optical splitter and a corresponding port of the fiber termination box may be identified based on the specific reflection peak on the OTDR curve.

Specifically, each output port of the fiber termination box is provided with the dustproof cap with a reflector. All or part of the OTDR test optical signal may be reflected.

For example, a reflectivity of the reflector is y dB. The reflectivity is related to the quality of the link between the reflector and the OTDR. As the quality of the link deteriorates, the reflectivity decreases. The reflectivity may be used as the criterion for determining the loss of the optical fiber link.

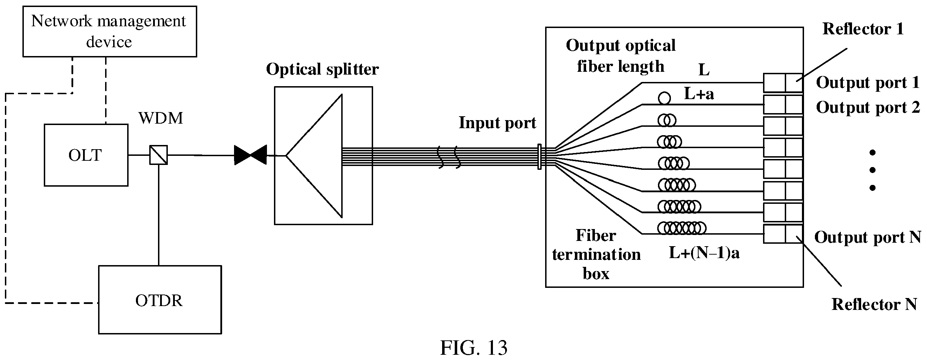

As shown in FIG. 13, the optical communication detection system may include the fiber termination box, the optical splitter, the WDM, the OTDR, the OLT, and the network management device. The WDM is separately connected to the OLT, the OTDR, and the optical splitter. The optical splitter is connected to the fiber termination box. The OTDR is connected to the network management device. The network management device may also be referred to as the network management system. After the fiber termination box is constructed, the OTDR sends the test optical signal. The test optical signal is connected to the feeder optical cable through the WDM. After the test optical signal is transmitted along the optical cable to the optical splitter in the fiber termination box, the optical splitter transmits the test optical signal to the N transmitters. The N reflectors reflect the test optical signal at the specific reflectivities. The reflected optical signals are returned along the optical fiber to the test device (namely, the OTDR) on the OLT side. The test device receives the reflected optical signals, records the receiving time (distances) and the reflection peak strengths of the reflected optical signals, and reports the receiving time (distances) and the reflection peak strengths to the network management device. A reflection peak power corresponding to the output port 2 of the fiber termination box is measured to be y' dB, and is reported to the network management device.

As shown in FIG. 9, the network management device calculates the distance of each reflector, and compares the actually measured reflectivity with the theoretical value, to determine the optical fiber link status. The reflectivity is y dB, indicating that the optical fiber link and the fiber termination box are normal. When the detected reflectivity y' decreases slightly and is less than the threshold W1 compared with y, it is determined that a previous optical fiber link of the optical splitter is faulty. When the detected reflectivity y' decreases greatly, and is less than the threshold W2 compared with y, it is determined that the optical path of the fiber termination box is faulty. The thresholds W1 and W2 are determined based on the type of the optical component and the optical fiber link structure. According to the foregoing criteria, the fiber termination box is normal, but a loss of a previous feeder cable connected to the fiber termination box slightly increases. Therefore, the construction acceptance is unqualified. The database is updated based on an obtained result.

In this embodiment of this application, based on the foregoing example, the pre-test on the previous optical cable loss of the output port 1 of the fiber termination box is completed, and construction acceptance is performed on the output port, to ensure the smooth service provisioning. The construction acceptance of the output port 2 to the output port N is completed in sequence according to this process.

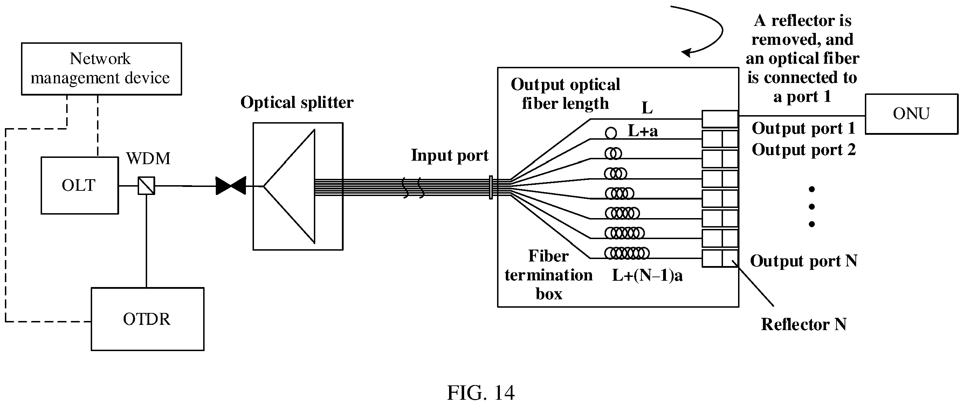

As shown in FIG. 14, when the optical fiber is connected to a port of the fiber termination box, the construction personnel receive the work order requesting to connect the terminal user to the output port 2 of the fiber termination box. The construction personnel accidentally perform patching on the output port 1 of the fiber termination box, removes the dustproof cap and the optical reflector corresponding to the port, and connects the corresponding optical cable.

The OTDR is started at the central office for detection. The position and the strength of the reflection peak of each output port of the fiber terminal box is identified. The distance between the corresponding output port of the fiber termination box and the OTDR may be obtained based on the position of the reflection peak. The corresponding port number may be identified based on the preset feature distance. After the construction, disappearance of a feature reflection peak strength is used to verify the constructed port number with the port number allocated in the work order and is saved to the database.

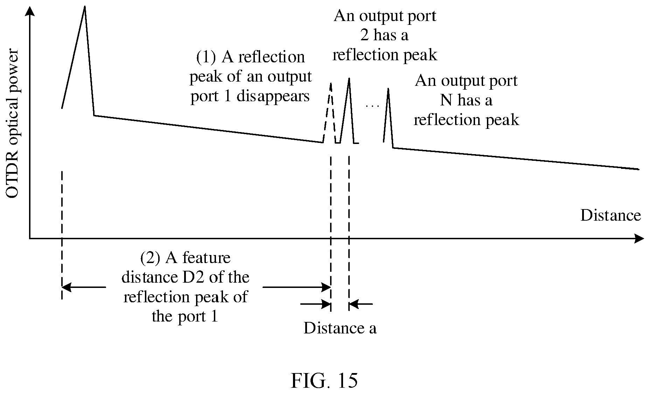

The verification process is as follows: Based on the port number 2 of the target constructed port allocated in the work order, the reference of the feature reflection peak of the target port in found in the reference database, and is denoted as B1. The feature reflection peak of the actual constructed port is denoted as B2. After the construction is completed, because the reflector of the constructed port is removed, the reflection peak B2 disappears. A reflection peak of another output port still exists, as shown in FIG. 15. The feature distance of the output port 2 is D1, and the distance of the disappeared feature reflection peak is D2. By comparison, it is found that D2 = D1 + a. Therefore, it is determined that a port corresponding to the disappeared reflection peak B2 is not the port with D2 but the port with D1. An error is prompted. A verification result is that the constructed port is inconsistent with the target port allocated in the work order.

In some embodiments of this application, the OTDR may be used to perform construction quality acceptance and port verification for the fiber termination box. The fiber termination box with the optical splitter is used to distinguish different feature reflection wavelengths or transmission wavelengths of the output ports. The output port of the optical splitter is provided with the dustproof cap with a reflector.

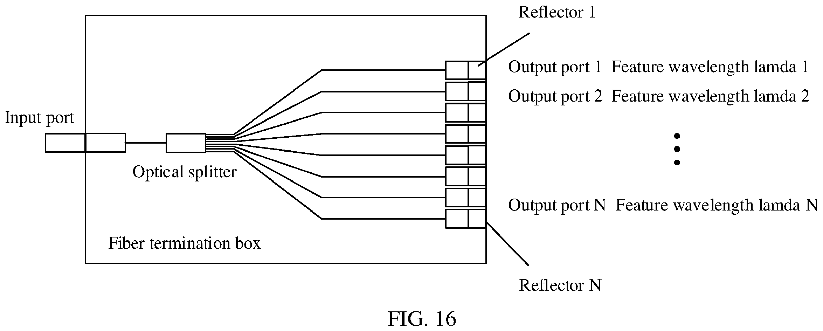

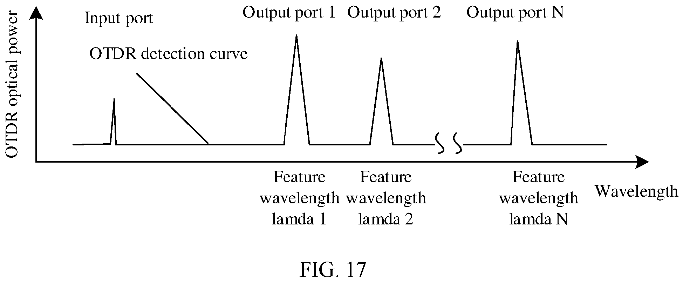

As shown in FIG. 16, the fiber termination box includes the optical splitter, and the N reflectors are respectively inserted into the N output ports. Wavelength information of test optical signals reflected by the N reflectors is different. As shown in FIG. 17, inside the fiber termination box, a feature wavelength of the output port 1 is lamda 1. Therefore, the output port 1 has a reflection peak at a wavelength of lamda 1 on the corresponding OTDR detection curve. Correspondingly, a feature wavelength of the output port N is lamda N. Therefore, the output port N has a reflection peak at a wavelength of lamda N on the corresponding OTDR detection curve. In this way, the N output ports of the fiber termination box may be identified based on specific feature wavelengths, of the reflection peaks, on the OTDR detection curve.

Specifically, each port of the fiber termination box is provided with the dustproof cap with a reflector. All or part of the OTDR test optical signal may be reflected.

A reflectivity of the reflector is x dB. The reflectivity is related to the quality of the link between the reflector and the OTDR. As the quality of the link deteriorates, the reflectivity decreases. The reflectivity may be used as the criterion for determining the loss of the optical fiber link.

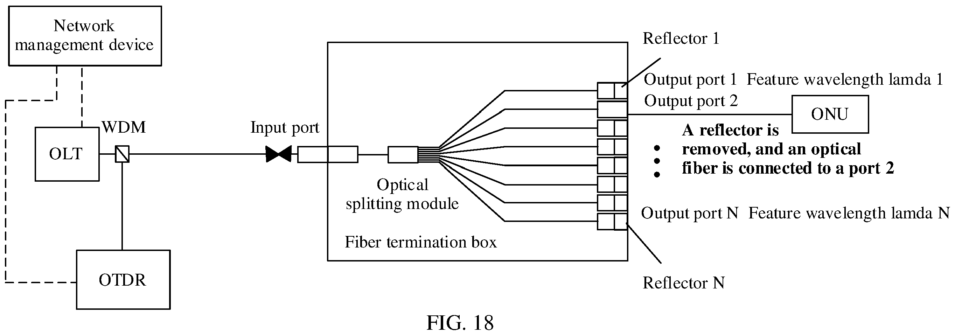

As shown in FIG. 18, the optical communication detection system may include the fiber termination box, the optical splitter, the WDM, the OTDR, the OLT, and the network management device. The WDM is separately connected to the OLT, the OTDR, and the optical splitter. The optical splitter is connected to the fiber termination box. The OTDR is connected to the network management device. The network management device may also be referred to as the network management system. After the fiber termination box is constructed, the OTDR sends the test optical signal. The test optical signal is connected to the feeder optical cable through the WDM. After the test optical signal is transmitted along the optical cable to the fiber termination box, a reflector in the fiber termination box reflects the test optical signal at a specific reflectivity. The reflected optical signal is returned along the optical fiber to the optical test device (namely, the OTDR) on the OLT side. The optical test device receives the reflected optical signal, records receiving time (or a receiving distance) and a reflection peak strength of the reflected optical signal, and reports the receiving time (or the receiving distance) and the reflection peak strength to the network management device. The reflection peak power corresponding to the output port 1 of the fiber termination box is measured to be x' dB, and is reported to the network management device.

As shown in FIG. 7, the network management device calculates the distance of each reflector, and compares the actually measured reflectivity with the theoretical value, to determine the optical fiber link status. The reflectivity is x dB, indicating that the optical fiber link and the fiber termination box are normal. When the detected reflectivity x' decreases slightly and is less than the threshold W1 compared with a normal reflectivity, it is determined that the previous optical fiber link of the optical splitter is faulty. When the detected reflectivity x' decreases greatly, and is less than the threshold W2 compared with the normal reflectivity, it is determined that the optical path of the fiber termination box is faulty. The thresholds W1 and W2 are determined based on the type of the optical component and the optical fiber link structure. According to the foregoing criteria, the fiber termination box is normal, the loss of the optical fiber link connected to the fiber terminal box is normal, and the construction acceptance is qualified. The database is updated based on an obtained result.

In this way, a pre-test on a previous optical cable loss of the output port 2 of the fiber termination box is completed, and construction acceptance is performed on the port, to ensure the smooth service provisioning.

The construction acceptance of the output port 1 and the output port 3 to the output port N is completed in sequence according to this process.

When the optical fiber is connected to the port of the fiber termination box, the construction personnel receive the work order requesting to connect the terminal user to the output port 2 of the fiber termination box. The construction personnel perform patching on the output port 2 of the fiber termination box, removes the dustproof cap and the reflector corresponding to the port, and connects the corresponding optical cable.

As shown in FIG. 18, the OTDR is started at the central office for detection. A wavelength, the position, and the strength of the reflection peak of each output port of the fiber terminal box are identified. The distance between the corresponding output port of the fiber termination box and the OTDR may be obtained based on the position of the reflection peak. The corresponding port number may be identified based on a feature wavelength of the reflection peak. After the construction, disappearance of a reflection peak of a reflected optical signal with a wavelength is used to verify the constructed port number with the port number allocated in the work order and is saved to the database.

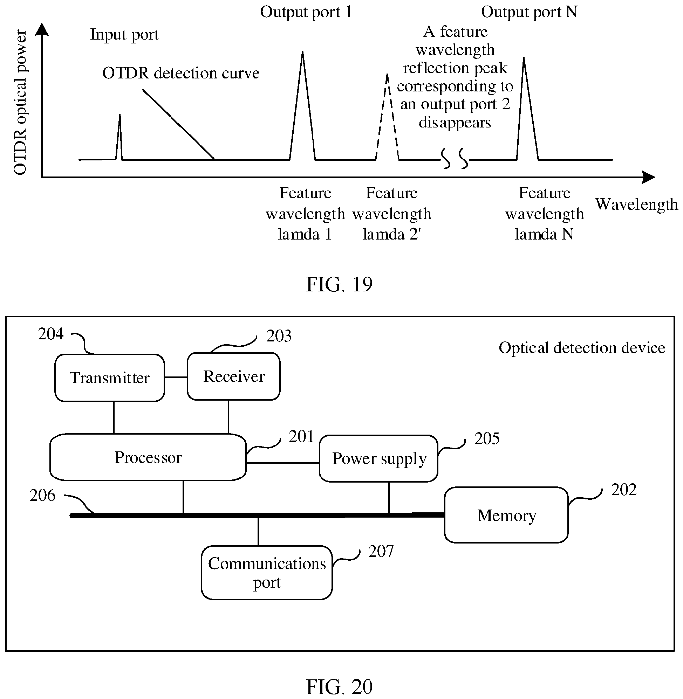

The verification process is as follows: Based on the port number 2 of the target constructed port allocated in the work order, the reference of the feature reflection peak of the target port in found in the reference database, and is denoted as A1. The feature reflection peak of the actual constructed port is denoted as A2. After the construction is completed, because the reflector of the constructed port is removed, the reflection peak A2 disappears. A reflection peak of another output port still exists, as shown in FIG. 19. The feature wavelength of the output port 2 is lamda 2, and the wavelength of the disappeared feature reflection peak is lamda 2. By comparison, it is found that lamda 2' = lamda 2. Based on the feature wavelength of the output port 2, it is determined that A1 and A2 correspond to a same output port. This indicates that the constructed port is the same as the target port allocated in the work order and the ports are verified to be consistent.

In this embodiment of this application, a size of the fiber termination box does not increase. With cooperation of the OTDR at a head end, in a scenario without an ONU, construction quality of the fiber termination box may be remotely accepted and a connection relationship may be remotely confirmed at the central office, to reduce labor costs and time consumed in on-site construction. When the output port of the optical distribution apparatus is connected to an optical cable for a user, whether a port of an on-site fiber termination box is consistent with that in the work order may be remotely verified at the central office, to ensure resource accuracy and avoid waste of fiber resources of an operator.

It should be noted that, for brief description, the foregoing method performed by the topology processing apparatus is described as a series of actions. However, a person skilled in the art should know that this application is not limited to the described action sequence, because according to this application, some steps may be performed in another sequence or performed simultaneously. It should be further appreciated by a person skilled in the art that the embodiments described in this specification all belong to example embodiments, and the involved actions and modules are not necessarily required by this application.

Because content such as information exchange between modules/units of the apparatus and an execution processes thereof is based on a same idea as the method embodiments of this application, and brings same technical effects as the method embodiments of this application. For the specific content, refer to the foregoing description in the method embodiments of this application. Details are not described herein.

An embodiment of this application further provides a computer storage medium. The computer storage medium stores a program. The program is executed to perform some or all of the steps described in the method embodiments.

FIG. 20 is a schematic diagram of a structure of still another optical detection device according to an embodiment of this application. The optical detection device is an OTDR. The optical detection device may include a processor 201 (for example, a CPU), a memory 202, a receiver 203, and a transmitter 204. The receiver 203 and the transmitter 204 are coupled to the processor 201. The processor 201 controls a receiving action of the receiver 203 and a sending action of the transmitter 204. The memory 202 may include a high-speed RAM memory, or may further include a non-volatile memory NVM, for example, at least one magnetic disk memory. The memory 202 may store various instructions, to implement various processing functions and implement method steps of this embodiment of this application. Optionally, the optical detection device in this embodiment of this application may further include one or more of a power supply 205, a communications bus 206, and a communications port 207. The receiver 203 and the transmitter 204 may be integrated into a transceiver of the optical detection device, or may be a receive antenna and a transmit antenna that are independent of each other on the optical detection device. The communications bus 206 is configured to implement a communication connection between elements. The communications port 207 is configured to implement connection and communication between the optical detection device and another peripheral.

In this embodiment of this application, the memory 202 is configured to store computer-executable program code. The program code includes an instruction. When the processor 201 executes the instruction, the instruction enables the processor 201 to execute a processing action of the optical detection device in the foregoing method embodiments, and enables the transmitter 204 to execute a sending action of the optical detection device in the foregoing method embodiments. Implementation principles and technical effects thereof are similar. Details are not described herein.

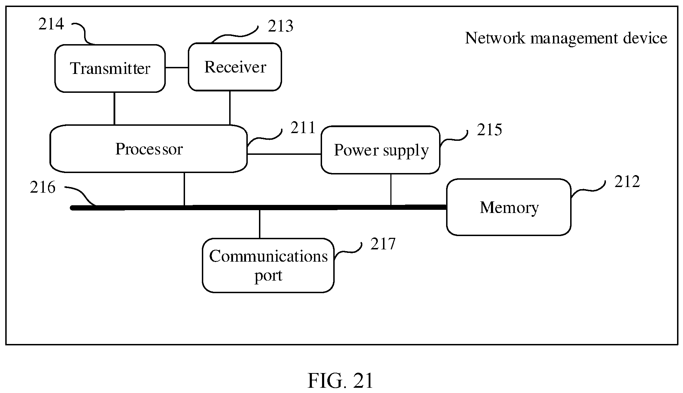

FIG. 21 is a schematic diagram of a structure of a network management device according to an embodiment of this application. The network management device may be a network management system. The network management device may include a processor 211 (for example, a CPU), a memory 212, a transmitter 214, and a receiver 213. The transmitter 214 and the receiver 213 are coupled to the processor 211. The processor 211 controls a sending action of the transmitter 214 and a receiving action of the receiver 213. The memory 212 may include a high-speed RAM memory, or may further include a non-volatile memory NVM, for example, at least one magnetic disk memory. The memory 212 may store various instructions, to implement various processing functions and implement method steps of this embodiment of this application. Optionally, the network management device in this embodiment of this application may further include one or more of a power supply 215, a communications bus 216, and a communications port 217. The receiver 213 and the transmitter 214 may be integrated into a transceiver of the network management device, or may be a receive antenna and a transmit antenna that are independent of each other on the network management device. The communications bus 216 is configured to implement a communication connection between elements. The communications port 217 is configured to implement connection and communication between the network management device and another peripheral.

In this embodiment of this application, the memory 212 is configured to store computer-executable program code. The program code includes an instruction. When the processor 211 executes the instruction, the instruction enables the processor 211 to execute a processing action of the network management device in the foregoing method embodiments, and enables the transmitter 214 to execute a sending action of the network management device in the foregoing method embodiments. Implementation principles and technical effects thereof are similar. Details are not described herein.

In another possible design, when the optical detection device or the network management device is a chip, the chip includes a processing unit and a communications unit. The processing unit may be, for example, a processor, and the communications unit may be, for example, an input/output interface, a pin, or a circuit. The processing unit may execute a computer-executable instruction stored in a storage unit, so that a chip in the terminal is enabled to perform the wireless transmission method according to any one of the possible implementations of the first aspect. Optionally, the storage unit is a storage unit inside the chip, for example, a register or a buffer. The storage unit may be alternatively a storage unit located outside the chip in an onsite terminal or a network management server, for example, a read-only memory (read-only memory, ROM), a static storage device of another type that can store static information and an instruction, or a random access memory (random access memory, RAM).

The processor mentioned above may be a general-purpose central processing unit (CPU), a microprocessor, an application-specific integrated circuit (application-specific integrated circuit, ASIC), or one or more integrated circuits configured to control program execution of the wireless communication method in the first aspect.

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to an actual need to achieve the objectives of the solutions of the embodiments. In addition, in the accompanying drawings of the apparatus embodiments provided in this application, connection relationships between modules indicate that the modules have communication connections with each other, which may be specifically implemented as one or more communications buses or signal cables. A person of ordinary skill in the art may understand and implement the embodiments of this application without creative efforts.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to achieve a same function may be of various forms, for example, in a form of an analog circuit, a digital circuit, a dedicated circuit, or the like. However, as for this application, software program implementation is a better implementation in most cases. Based on such an understanding, the technical solutions of this application essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to perform the methods described in the embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

## Claims

1. An optical distribution apparatus, wherein the optical distribution apparatus comprises an input port, M output ports, and N first optical reflectors, M is greater than or equal to N, and M and N are positive integers;
the input port is separately connected to the M output ports through M optical fibers; and
one of the N first optical reflectors is connected to one of the M output ports in a pluggable manner, and each of the N first optical reflectors is configured to reflect a test optical signal entering a corresponding output port.

2. The optical distribution apparatus according to claim 1, wherein lengths of N optical fibers corresponding to N output ports connected to the N first optical reflectors are different from each other; and
reflection peak parameters corresponding to test optical signals separately reflected by the N first optical reflectors are different.

3. The optical distribution apparatus according to claim 1, wherein test optical signals separately reflected by the N first optical reflectors have different wavelengths.

4. The optical distribution apparatus according to any one of claims 1 to 3, wherein the optical distribution apparatus further comprises an optical splitting module; and
one port of the optical splitting module is connected to the input port, and other M ports of the optical splitting module are respectively connected to the M optical fibers.

5. The optical distribution apparatus according to any one of claims 1 to 3, wherein the optical distribution apparatus comprises M input ports; and
the optical distribution apparatus is separately connected to M ports of an optical splitter through the M input ports.

6. The optical distribution apparatus according to any one of claims 1 to 5, wherein the optical distribution apparatus further comprises a second optical reflector; and
the second optical reflector is connected to the input port, and a second reflection peak of a test optical signal that enters the input port and that is reflected by the second optical reflector is used to identify a first reflection peak of a test optical signal reflected by the first optical reflector.

7. The optical distribution apparatus according to any one of claims 1 to 6, wherein the optical distribution apparatus further comprises N dustproof caps, and one of the N dustproof caps and one first optical reflector form an integrated structure.

8. An optical communication detection system, wherein the optical communication detection system comprises an optical distribution apparatus, an optical detection device, and a network management device;
the optical detection device is configured to send a test optical signal to the optical distribution apparatus;
the optical distribution apparatus is configured to reflect the test optical signal through a first optical reflector in the optical distribution apparatus, wherein the optical distribution apparatus has M output ports and N first optical reflectors, M is greater than or equal to N, M and N are positive integers, and one of the N first optical reflectors is connected to one of the M output ports in a pluggable manner;
the optical detection device is further configured to receive the test optical signal reflected by the first optical reflector, and send a reflected optical signal parameter corresponding to the test optical signal reflected by the first optical reflector to the network management device; and
the network management device is configured to receive the reflected optical signal parameter, corresponding to the test optical signal reflected by the first optical reflector, that is sent by the optical detection device, and identify an output port of the optical distribution apparatus based on the reflected optical signal parameter corresponding to the test optical signal reflected by the first optical reflector.

9. The optical communication detection system according to claim 8, wherein the optical detection device is configured to send a first test optical signal to the optical distribution apparatus;
the optical distribution apparatus is configured to separately reflect the first test optical signal through the N first optical reflectors in the optical distribution apparatus;
the optical detection device is further configured to receive first test optical signals separately reflected by the N first optical reflectors, and send reflected optical signal parameters corresponding to the first test optical signals separately reflected by the N first optical reflectors to the network management device; and
the network management device is further configured to receive the reflected optical signal parameters, corresponding to the first test optical signals separately reflected by the N first optical reflectors, that are sent by the optical detection device, and detect a status of optical fiber links between the optical detection device and N output ports of the optical distribution apparatus based on the reflected optical signal parameters corresponding to the first test optical signals separately reflected by the N first optical reflectors.

10. The optical communication detection system according to claim 9, wherein the reflected optical signal parameter comprises a reflection peak strength of the first test optical signal reflected by the first optical reflector; and
the network management device is configured to: when reflection peak strengths corresponding to the first test optical signals separately reflected by the N first optical reflectors are lower than a first threshold, determine that a status of an optical fiber link between the optical detection device and an input port of the optical distribution apparatus is abnormal, or when the reflection peak strengths corresponding to the first test optical signals separately reflected by the N first optical reflectors are lower than a second threshold, determine that a status of optical fiber links between the input port and the N output ports of the optical distribution apparatus is abnormal, or when the reflection peak strengths corresponding to the first test optical signals separately reflected by the N first optical reflectors are greater than or equal to the first threshold, determine that the status of the optical fiber links between the optical detection device and the N output ports of the optical distribution apparatus is normal, wherein the second threshold is less than the first threshold.

11. The optical communication detection system according to claim 8, wherein the optical detection device is configured to send a second test optical signal to the optical distribution apparatus;
the optical distribution apparatus is configured to separately reflect the second test optical signal through N-1 first optical reflectors in the optical distribution apparatus, wherein the N-1 first optical reflectors are connected to N-1 of the M output ports, and a first optical reflector that is of the N first optical reflectors and that is not connected to an output port cannot reflect the second test optical signal;
the optical detection device is further configured to receive second test optical signals separately reflected by the N-1 first optical reflectors, and send reflected optical signal parameters corresponding to the second test optical signals separately reflected by the N-1 first optical reflectors to the network management device; and
the network management device is configured to receive the reflected optical signal parameters, corresponding to the second test optical signals separately reflected by the N-1 first optical reflectors, that are sent by the optical detection device, and identify, based on the reflected optical signal parameters corresponding to the second test optical signals separately reflected by the N-1 first optical reflectors, an output port from which a first optical reflector is removed in the optical distribution apparatus.

12. The optical communication detection system according to claim 11, wherein the network management device is configured to: when a first optical reflector needs to be removed from a target output port in the optical distribution apparatus, obtain a reference reflected optical signal parameter corresponding to the target output port from a reference database of the network management device; determine, based on the reflected optical signal parameters corresponding to the second test optical signals separately reflected by the N-1 first optical reflectors, a reflected optical signal parameter corresponding to a disappeared reflected optical signal; determine whether the reflected optical signal parameter corresponding to the disappeared reflected optical signal is the same as the reference reflected optical signal parameter corresponding to the target output port; if the reflected optical signal parameter corresponding to the disappeared reflected optical signal is the same as the reference reflected optical signal parameter corresponding to the target output port, determine that the target output port is the output port from which the first optical reflector is removed in the optical distribution apparatus; and if the reflected optical signal parameter corresponding to the disappeared reflected optical signal is different from the reference reflected optical signal parameter corresponding to the target output port, determine that the target output port is not the output port from which the first optical reflector is removed in the optical distribution apparatus.

13. The optical communication detection system according to claim 11 or 12, wherein the reflected optical signal parameter comprises a reflection peak position and a reflection peak strength corresponding to the reflection peak position; or
the reflected optical signal parameter comprises wavelength information of a reflected optical signal

14. The optical communication detection system according to any one of claims 8 to 13, wherein the optical distribution apparatus further comprises the input port and a second optical reflector, and the second optical reflector is connected to the input port; and
the network management device is configured to detect a second reflection peak of a test optical signal that enters the input port and that is reflected by the second optical reflector, and identify, based on the second reflection peak, a first reflection peak of the test optical signal reflected by the first optical reflector.

15. An optical communication detection method, wherein the method comprises:
receiving, by a network management device, a reflected optical signal parameter, corresponding to a test optical signal reflected by a first optical reflector, that is sent by an optical detection device, wherein the test optical signal reflected by the first optical reflector is sent by an optical distribution apparatus to the optical detection device, the test optical signal is sent by the optical detection device to the optical distribution apparatus, the optical distribution apparatus has M output ports and N first optical reflectors, M is greater than or equal to N, M and N are positive integers, and one of the N first optical reflectors is connected to one of the M output ports in a pluggable manner; and
identifying, by the network management device, an output port of the optical distribution apparatus based on the reflected optical signal parameter corresponding to the test optical signal reflected by the first optical reflector.

16. The optical communication detection method according to claim 15, wherein after the identifying, by the network management device, an output port of the optical distribution apparatus based on the reflected optical signal parameter corresponding to the test optical signal reflected by the first optical reflector, the method further comprises:
when the network management device receives reflected optical signal parameters, corresponding to first test optical signals separately reflected by the N first optical reflectors, that are sent by the optical detection device, detecting, by the network management device, a status of optical fiber links between the optical detection device and N output ports of the optical distribution apparatus based on the reflected optical signal parameters corresponding to the first test optical signals separately reflected by the N first optical reflectors.

17. The optical communication detection method according to claim 16, wherein the reflected optical signal parameter comprises a reflection peak strength of the first test optical signal reflected by the first optical reflector; and
the detecting, by the network management device, a status of optical fiber links between the optical detection device and N output ports of the optical distribution apparatus based on the reflected optical signal parameters corresponding to the first test optical signals separately reflected by the N first optical reflectors comprises:
when reflection peak strengths corresponding to the first test optical signals separately reflected by the N first optical reflectors are lower than a first threshold, determining, by the network management device, that a status of an optical fiber link between the optical detection device and an input port of the optical distribution apparatus is abnormal, or
when the reflection peak strengths corresponding to the first test optical signals separately reflected by the N first optical reflectors are lower than a second threshold, determining, by the network management device, that a status of optical fiber links between the input port and the M output ports of the optical distribution apparatus is abnormal, or
when the reflection peak strengths corresponding to the first test optical signals separately reflected by the N first optical reflectors are greater than or equal to the first threshold, determining, by the network management device, that the status of the optical fiber links between the optical detection device and the M output ports of the optical distribution apparatus is normal, wherein the second threshold is less than the first threshold.

18. The optical communication detection method according to claim 15, wherein the identifying, by the network management device, an output port of the optical distribution apparatus based on the reflected optical signal parameter corresponding to the test optical signal reflected by the first optical reflector comprises:
when the network management device receives reflected optical signal parameters, corresponding to second test optical signals separately reflected by N-1 first optical reflectors, that are sent by the optical detection device, identifying, by the network management device, based on the reflected optical signal parameters corresponding to the second test optical signals separately reflected by the N-1 first optical reflectors, an output port from which a first optical reflector is removed in the optical distribution apparatus, wherein
the N-1 first optical reflectors are connected to N-1 of the M output ports, and a first optical reflector that is of the N first optical reflectors and that is not connected to an output port cannot reflect the second test optical signal.

19. The optical communication detection method according to claim 18, wherein the identifying, by the network management device, based on the reflected optical signal parameters corresponding to the second test optical signals separately reflected by the N-1 first optical reflectors, an output port from which a first optical reflector is removed in the optical distribution apparatus comprises:
when a first optical reflector needs to be removed from a target output port in the optical distribution apparatus, obtaining, by the network management device, a reference reflected optical signal parameter corresponding to the target output port from a reference database of the network management device;
determining, by the network management device, based on the reflected optical signal parameters corresponding to the second test optical signals separately reflected by the N-1 first optical reflectors, a reflected optical signal parameter corresponding to a disappeared reflected optical signal;
determining, by the network management device, whether the reflected optical signal parameter corresponding to the disappeared reflected optical signal is the same as the reference reflected optical signal parameter corresponding to the target output port;
if the reflected optical signal parameter corresponding to the disappeared reflected optical signal is the same as the reference reflected optical signal parameter corresponding to the target output port, determining, by the network management device, that the target output port is the output port from which the first optical reflector is removed in the optical distribution apparatus; and
if the reflected optical signal parameter corresponding to the disappeared reflected optical signal is different from the reference reflected optical signal parameter corresponding to the target output port, determining, by the network management device, that the target output port is not the output port from which the first optical reflector is removed in the optical distribution apparatus.

20. The optical communication detection method according to claim 18 or 19, wherein the reflected optical signal parameter comprises a reflection peak position and a reflection peak strength corresponding to the reflection peak position; or
the reflected optical signal parameter comprises a wavelength of a reflected optical signal.

21. The optical communication detection method according to any one of claims 15 to 20, wherein the optical distribution apparatus further comprises the input port and a second optical reflector, and the second optical reflector is connected to the input port; and
the method further comprises:
detecting, by the network management device, a second reflection peak of a test optical signal that enters the input port and that is reflected by the second optical reflector, and
identifying, by the network management device based on the second reflection peak, a first reflection peak of the test optical signal reflected by the first optical reflector.
